(19) **Europäisches Patentamt / European Patent Office / Office européen des brevets**

(11) **EP 4 521 664 A1**

(12) **EUROPEAN PATENT APPLICATION**
published in accordance with Art. 153(4) EPC

(43) Date of publication:
**12.03.2025 Bulletin 2025/11**

(21) Application number: **23810778.3**

(22) Date of filing: **04.05.2023**

(51) International Patent Classification (IPC):
**H04L 1/00** (2006.01)    **H04L 1/16** (2023.01)
**H04L 1/18** (2023.01)

(52) Cooperative Patent Classification (CPC):
**H04L 1/1812; H04L 1/00; H04L 1/1607;**
**H04L 1/1671**

(86) International application number:
**PCT/CN2023/091989**

(87) International publication number:
**WO 2023/226705 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.05.2022   CN 202210589412**

(71) Applicant: **Huawei Technologies Co., Ltd.**
**Shenzhen, Guangdong 518129 (CN)**

(72) Inventors:
• **LIU, Ke**
**Shenzhen, Guangdong 518129 (CN)**

• **WANG, Xianbin**
**Shenzhen, Guangdong 518129 (CN)**
• **ZHANG, Huazi**
**Shenzhen, Guangdong 518129 (CN)**
• **TONG, Jiajie**
**Shenzhen, Guangdong 518129 (CN)**
• **LI, Rong**
**Shenzhen, Guangdong 518129 (CN)**
• **WANG, Jun**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **INFORMATION TRANSMISSION METHOD AND APPARATUS**

(57)    Embodiments of this application provide an information transmission method and an apparatus, to allow a receive end to send more feedback information to a transmit end, and allow the transmit end to perform targeted retransmission based on the more feedback information, thereby improving decoding and error correction performance of the receive end. The transmit end sends a first coded bit sequence based on a to-be-transmitted coded bit sequence. The receive end receives and decodes a first to-be-decoded sequence, and sends first indication information if the decoding fails, where the first indication information includes information about a location, in the to-be-transmitted coded bit sequence, of at least one sent coded bit in the to-be-transmitted coded bit sequence. The transmit end receives the first indication information, and sends a second coded bit sequence based on the first indication information, where the second coded bit sequence includes the at least one sent coded bit in the to-be-transmitted coded bit sequence and/or at least one unsent coded bit in the to-be-transmitted coded bit sequence.

EP 4 521 664 A1

Transmit end

Receive end

S501: The transmit end sends a first coded bit sequence; and correspondingly, the receive end receives a first to-be-decoded sequence

S502: The receive end decodes the first to-be-decoded sequence; and if the decoding fails, the receive end determines first indication information, where the first indication information includes information about a location, in the to-be-transmitted coded bit sequence, of at least one sent coded bit in a to-be-transmitted coded bit sequence

S503: The receive end sends the first indication information; and correspondingly, the transmit end receives the first indication information

S504: The transmit end sends a second coded bit sequence based on the first indication information; and correspondingly, the receive end receives a second to-be-decoded sequence

S505: The receive end performs re-decoding based on the second to-be-decoded sequence

FIG. 5A

**Description**

**CROSS-REFERENCE TO RELATED APPLICATIONS**

This application claims priority to Chinese Patent Application No. 202210589412.8, filed with the China National Intellectual Property Administration on May 26, 2022 and entitled "INFORMATION TRANSMISSION METHOD AND APPARATUS", which is incorporated herein by reference in its entirety.

**TECHNICAL FIELD**

This application relates to the field of communication technologies, and in particular, to an information transmission method and an apparatus.

**BACKGROUND**

Currently, after sending initially-transmitted data to a receive end, a transmit end may determine, based on feedback information fed back by the receive end, whether to send retransmitted data to the receive end. For example, after the receive end receives the initially-transmitted data sent by the transmit end, if the receive end can correctly decode the initially-transmitted data, the receive end returns an acknowledgement (acknowledgement, ACK) to the transmit end; or if the receive end cannot correctly decode the initially-transmitted data, the receive end returns a negative acknowledgement (non-acknowledgement, NACK) to the transmit end. In the case of receiving the NACK, the receive end sends the retransmitted data to the receive end. After receiving the retransmitted data, the receive end combines the retransmitted data and the initially-transmitted data for re-decoding.

In the foregoing solution, the feedback information (namely, the ACK or the NACK) fed back by the receive end is 1 bit. In the occurrence of a decoding error at the receive end, regardless of a location at which the decoding error occurs, the feedback information is a 1-bit NACK. Therefore, the transmit end cannot perform targeted design based on the decoding error during retransmission, and cannot fully utilize an error correction and detection capability of the receive end.

**SUMMARY**

Embodiments of this application provide an information transmission method and an apparatus, to allow a transmit end to perform targeted retransmission based on more feedback information by introducing the feedback information to a receive end, thereby improving decoding and error correction performance of the receive end.

According to a first aspect, an information transmission method is provided, including: A transmit end sends a first coded bit sequence based on a to-be-transmitted coded bit sequence, where the to-be-transmitted coded bit sequence includes the first coded bit sequence. The transmit end receives first indication information, where the first indication information includes information about a location, in the to-be-transmitted coded bit sequence, of at least one sent coded bit in the to-be-transmitted coded bit sequence. The transmit end sends a second coded bit sequence based on the first indication information, where the to-be-transmitted coded bit sequence includes the second coded bit sequence, and the second coded bit sequence includes the at least one sent coded bit in the to-be-transmitted coded bit sequence and/or at least one unsent coded bit in the to-be-transmitted coded bit sequence.

In the solution, after sending the first coded bit sequence, the transmit end may send the second coded bit sequence based on the first indication information fed back by a receive end, and because the first indication information includes the information about the location, in the to-be-transmitted coded bit sequence, of the at least one sent coded bit in the to-be-transmitted coded bit sequence, a coded bit in the second coded bit sequence sent by the transmit end is more targeted. For example, in addition to the at least one unsent coded bit, the second coded bit sequence may further include the at least one sent coded bit. In this way, a decoding and error correction process of the receive end can also be more targeted. In comparison with a conventional technology in which the transmit end retransmits only an unsent coded bit, in this embodiment of this application, an error correction and detection capability of the receive end can be fully utilized, and decoding and error correction performance of the receive end is effectively improved.

In a possible design, the transmit end retransmits a coded bit sequence at least once based on the to-be-transmitted coded bit sequence. The first coded bit sequence is an initially transmitted coded bit sequence, and the second coded bit sequence is a coded bit sequence retransmitted for the first time. Alternatively, the first coded bit sequence is a coded bit sequence retransmitted for the $(q-1)^{th}$ time, and the second coded bit sequence is a coded bit sequence retransmitted for the $q^{th}$ time, where $q$ is a positive integer greater than 1.

In other words, the first coded bit sequence may be a coded bit sequence sent in an initial transmission process, or may be a coded bit sequence sent in a retransmission process, and the second coded bit sequence is a coded bit sequence sent after the transmit end sends the first coded bit sequence. In other words, the transmit end sends no other coded bit sequence between the first coded bit sequence and the second coded bit sequence.

It may be understood that, in this specification, a process in which the transmit end sends a coded bit sequence to the receive end for the first time based on the to-be-transmitted coded bit sequence may be referred to as an initial transmission process, and a process in which the transmit end sends a coded bit sequence to the receive end based on the to-be-transmitted coded bit sequence after the initial transmission process may be referred to as a retransmission process, where a quantity of retransmissions may be one or more. Retransmitting a coded bit sequence each time may be retransmitting a complete coded bit sequence, or may be retransmitting a part of the coded bit sequence. This is not limited in this application.

It may be understood that, after the transmit end sends the second coded bit sequence, if the receive end still fails in decoding and a maximum quantity of retransmissions is not reached, the transmit end may continue to perform next retransmission until the receive end succeeds in decoding or the maximum quantity of retransmissions is reached.

In a possible design, the information about the location is an index value of the location of the at least one sent coded bit in the to-be-transmitted coded bit sequence.

In this design, the receive end directly indicates, to the transmit end, a location of the at least one coded bit that needs to be repeatedly transmitted by the transmit end in the to-be-transmitted coded bit sequence, so that complexity of generating the first indication information by the transmit end and parsing the first indication information by the receive end can be reduced.

In a possible design, the information about the location is indication information of at least one resource sub-segment corresponding to the at least one sent coded bit, and the at least one resource sub-segment is located in a resource segment corresponding to the to-be-transmitted coded bit sequence.

In this design, a location of the at least one sent coded bit in the to-be-transmitted coded bit sequence is indirectly indicated by using the indication information of the at least one resource sub-segment corresponding to the at least one sent coded bit, so that a data amount of the first indication information can be reduced (for example, when one resource sub-segment corresponds to a plurality of coded bits).

It may be understood that the two designs are merely examples. During actual application, the receive end may alternatively feed back, to the receive end in another form, the location of the at least one sent coded bit in the to-be-transmitted coded bit sequence.

In a possible design, a proportion of sent coded bits in the second coded bit sequence does not exceed a preset value $\delta$.

In this way, it can be ensured that proportions of coded bits (namely, coded bits other than sent coded bits) sent for the first time and coded bits (namely, sent coded bits) not sent for the first time in the second coded bit sequence are properly allocated, thereby avoiding a problem of poor decoding and error correction performance caused by an excessively small proportion of sent coded bits, and avoiding a problem of a large quantity of occupied transmission resources caused by an excessively large proportion of sent coded bits.

In a possible design, a quantity of at least one sent coded bit in the second coded bit sequence meets the following condition:

$$n''_k = \begin{cases} 0 & , & 0 > \dfrac{\delta'(N_{k-1} + n_k) - N''_{k-1}}{1 + \delta'} \\[2em] \left\lfloor \dfrac{\delta'(N_{k-1} + n_k) - N''_{k-1}}{1 + \delta'} \right\rfloor , & 0 \leq \dfrac{\delta'(N_{k-1} + n_k) - N''_{k-1}}{1 + \delta'} \leq n_k \\[2em] n_k & , & n_k < \dfrac{\delta'(N_{k-1} + n_k) - N''_{k-1}}{1 + \delta'} \end{cases}$$

$n''_k$ is the quantity of the at least one sent coded bit in the to-be-transmitted coded bit sequence included in the second coded bit sequence, $N_{k-1}$ represents a quantity of coded bits sent by the first communication apparatus before the second coded bit sequence, $N''_{k-1}$ represents a quantity of coded bits repeatedly sent by the transmit end before the second coded bit sequence, $n_k$ is a quantity of coded bits included in the second coded bit sequence, and $\delta'$ is a threshold corresponding to a proportion of repeatedly sent coded bits in all coded bit sequences sent by the transmit end based on the to-be-transmitted coded bit sequence, where the proportion of repeatedly sent coded bits in all the coded bit sequences sent by the transmit end based on the to-be-transmitted coded bit sequence does not exceed $\delta'$.

In this way, it can be ensured that proportions of coded bits sent for the first time and coded bits not sent for the first time in a plurality of transmission processes of to-be-transmitted coded bits are properly allocated, thereby avoiding a problem of poor decoding and error correction performance caused by an excessively small proportion of sent coded bits, and avoiding a problem of a large quantity of occupied transmission resources caused by an excessively large proportion of sent coded bits.

In a possible design, $\delta'$ is greater than or equal to a preset threshold. In this way, it can be ensured that the proportions of coded bits sent for the first time and coded bits not sent for the first time in the plurality of transmission processes of to-be-transmitted coded bits are properly allocated.

According to a second aspect, an information transmission method is provided, including: A receive end receives a first to-be-decoded sequence, where the first to-be-decoded sequence is a sequence formed by a first coded bit sequence transmitted through a channel, where the first coded bit sequence is sent by a transmit end based on a to-be-transmitted coded bit sequence. The receive end decodes the first to-be-decoded sequence. If the decoding fails, the receive end determines first indication information, where the first indication information includes information about a location, in the to-be-transmitted coded bit sequence, of at least one sent coded bit in the to-be-transmitted coded bit sequence. The receive end sends the first indication information. The receive end receives a second to-be-decoded sequence, where the second to-be-decoded sequence is a sequence formed by a second coded bit sequence transmitted through a channel, where the second coded bit sequence is sent by the transmit end based on the first indication information.

In a possible design, the first coded bit sequence is a coded bit sequence initially transmitted by the transmit end, and the second coded bit sequence is a coded bit sequence retransmitted by the transmit end for the first time. Alternatively, the first coded bit sequence is a coded bit sequence retransmitted by the transmit end for the $(q-1)^{th}$ time, and the second coded bit sequence is a coded bit sequence retransmitted by the transmit end for the $q^{th}$ time, where q is a positive integer greater than 1.

In a possible design, the information about the location is an index value of the location of the at least one sent coded bit in the to-be-transmitted coded bit sequence.

In a possible design, the receive end may obtain a log-likelihood ratio LLR sequence corresponding to the first to-be-decoded sequence, where an LLR in the LLR sequence corresponds to a coded bit in the to-be-transmitted coded bit sequence. Correspondingly, that the receive end determines first indication information may include: The receive end determines the first $n''_k$ LLRs with smaller amplitudes from the LLR sequence, where $n''_k$ is a positive integer, and $n''_k$ coded bits corresponding to the $n''_k$ LLRs are the at least one sent coded bit in the to-be-transmitted coded bit sequence. The receive end determines the first indication information based on locations of the $n''_k$ coded bits corresponding to the $n''_k$ LLRs in the to-be-transmitted coded bit sequence.

In this design manner, the receive end selects coded bits with smaller LLR amplitudes, and feeds back information about locations of these coded bits to the transmit end, so that the transmit end may retransmit these coded bits with smaller LLR amplitudes, and the receive end may subsequently re-obtain a decoding result based on the coded bits retransmitted by the transmit end. In this way, decoding and error correction performance of the receive end is improved.

In a possible design, the information about the location is information about at least one resource sub-segment corresponding to the at least one sent coded bit, and the at least one resource sub-segment is located in a resource segment corresponding to the to-be-transmitted coded bit sequence.

In a possible design, the receive end may obtain a channel estimation result corresponding to the first to-be-decoded sequence, where a channel estimation value in the channel estimation result corresponds to a coded bit in the to-be-transmitted coded bit sequence. Correspondingly, that the receive end determines first indication information may include: The receive end determines, based on the channel estimation result, a channel estimation average value corresponding to each resource sub-segment in the resource segment corresponding to the to-be-transmitted coded bit sequence. The receive end determines M resource sub-segments with smaller channel estimation average values from the resource segment corresponding to the to-be-transmitted coded bit sequence, where M is a positive integer. The receive end determines the first indication information based on the M resource sub-segments.

In this design manner, the receive end selects the resource sub-segments with smaller channel estimation average values, and feeds back information about locations of these resource sub-segments to the transmit end, so that the transmit end may retransmit coded bits corresponding to these resource sub-segments, and the receive end may subsequently re-obtain a decoding result based on the coded bits retransmitted by the transmit end. In this way, decoding and error correction performance of the receive end is improved.

In a possible design, a proportion of sent coded bits in the second coded bit sequence does not exceed a preset value $\delta$.

In a possible design, a quantity of at least one sent coded bit in the second coded bit sequence meets the following condition:

$$\mathrm{n}''_{\mathrm{k}}$$

$$
= \begin{cases}
0 & , & 0 > \dfrac{\delta'(\mathrm{N}_{k-1} + \mathrm{n}_k) - \mathrm{N}''_{k-1}}{1 + \delta'} \\[3ex]
\left\lfloor \dfrac{\delta'(\mathrm{N}_{k-1} + \mathrm{n}_k) - \mathrm{N}''_{k-1}}{1 + \delta'} \right\rfloor & , & 0 \le \dfrac{\delta'(\mathrm{N}_{k-1} + \mathrm{n}_k) - \mathrm{N}''_{k-1}}{1 + \delta'} \le \mathrm{n}_k \\[3ex]
\mathrm{n}_k & , & \mathrm{n}_k < \dfrac{\delta'(\mathrm{N}_{k-1} + \mathrm{n}_k) - \mathrm{N}''_{k-1}}{1 + \delta'}
\end{cases}
$$

n"$_k$ is the quantity of the at least one sent coded bit in the to-be-transmitted coded bit sequence included in the second coded bit sequence, $N_{k-1}$ represents a quantity of coded bits sent by the first communication apparatus before the second coded bit sequence, $N''_{k-1}$ represents a quantity of coded bits repeatedly sent by the transmit end before the second coded bit sequence, $n_k$ is a quantity of coded bits included in the second coded bit sequence, and $\delta'$ is a threshold corresponding to a proportion of repeatedly sent coded bits in all coded bit sequences sent by the transmit end based on the to-be-transmitted coded bit sequence, where the proportion of repeatedly sent coded bits in all the coded bit sequences sent by the transmit end based on the to-be-transmitted coded bit sequence does not exceed $\delta'$.

In a possible design, $\delta'$ is greater than or equal to a preset threshold. In this way, the decoding and error correction performance of the receive end can be further improved.

For beneficial effects of the designs, refer to the beneficial effects of corresponding designs in the first aspect. Details are not described herein again.

According to a third aspect, an information transmission method is provided, including: A transmit end sends a third coded bit sequence.

The transmit end receives a first decoding result. The transmit end determines, based on the first decoding result and an information bit in the third coded bit sequence, a coded bit that encounters a decoding error from the third coded bit sequence. The transmit end determines at least one coded bit in the third coded bit sequence based on the coded bit that encounters a decoding error. The transmit end sends second indication information, where the second indication information includes information about a location of the at least one coded bit.

In the solution, after sending the third coded bit sequence, the transmit end may determine, based on the first decoding result fed back by a receive end, the coded bit that encounters a decoding error, and then send the second indication information based on the coded bit that encounters a decoding error, so that the receive end may perform error correction decoding based on the second indication information. In this way, decoding and error correction performance of the receive end can be effectively improved.

In a possible design, when a quantity of coded bits that encounter a decoding error is less than or equal to T, the transmit end uses the coded bit that encounters a decoding error as the at least one coded bit. Alternatively, when a quantity of coded bits that encounter a decoding error is greater than T, the transmit end selects T coded bits from the coded bits that encounter a decoding error, and uses the T coded bits as the at least one coded bit. It may be understood that, when the quantity of coded bits that encounter a decoding error is equal to T, processing may be performed according to the solution in which the quantity of coded bits that encounter a decoding error is less than T (in other words, the coded bit that encounters a decoding error is used as the at least one coded bit). Certainly, processing may alternatively be performed according to the solution in which the quantity of coded bits that encounter a decoding error is greater than T. This is not limited in this application. For example, when the quantity of coded bits that encounter a decoding error is less than T, the transmit end uses the coded bit that encounters a decoding error as the at least one coded bit. Alternatively, when the quantity of coded bits that encounter a decoding error is greater than or equal to T, the transmit end selects the T coded bits from the coded bits that encounter a decoding error, and uses the T coded bits as the at least one coded bit. T is a preset threshold.

In other words, when there is a small quantity of coded bits that encounter a decoding error, the transmit end may directly indicate locations of these coded bits that encounter a decoding error, so that the receive end directly corrects the error. When there is a large quantity of coded bits that encounter a decoding error, the transmit end indicates a location of a part of the coded bit that encounters a decoding error, so that the receive end performs error correction decoding based on the location of the part of the coded bit that encounters a decoding error.

In a possible design, the second indication information further includes an indicator bit. When the quantity of coded bits that encounter a decoding error is less than T, a value of the indicator bit is a first value. When the quantity of coded bits that encounter a decoding error is greater than or equal to T, a value of the indicator bit is a second value. The first value is different from the second value. For example, the first value is 0, and the second value is 1; or the first value is 1, and the second value is 0.

In this way, the receive end may determine whether the information about the location carried in the second indication information is information about locations of all coded bits that encounter an error or information about a location of a part of coded bits that encounter an error, and use different error correction decoding schemes for different cases. Therefore, reliability of the solution is improved.

In a possible design, T is set to a maximum value that enables $N - 1 \geq \log_2 \sum_{i=1}^{T} \binom{k}{i}$ to be true, where N is an information bit length of the second indication information, and k is a quantity of information bits in a first coded bit sequence.

In this way, it can be ensured that the second indication information can indicate information about locations of the T coded bits, thereby improving the reliability of the solution.

According to a fourth aspect, an information transmission method is provided, including: A receive end receives a third to-be-decoded sequence, where the third to-be-decoded sequence is a sequence formed by a third coded bit sequence transmitted through a channel, where the third coded bit sequence is sent by a transmit end. The receive end decodes the third to-be-decoded sequence to obtain a first decoding result. If the decoding fails, the receive end sends the first decoding result. The receive end receives second indication information, where the second indication information includes information about a location of at least one coded bit in the third coded bit sequence. The receive end obtains a second decoding result based on the second indication information and the first decoding result.

In a possible design, the second indication information further includes an indicator bit. That the receive end obtains a second decoding result based on the second indication information and the first decoding result includes: When the indicator bit is a first value, the receive end determines a coded bit that encounters an error in the first decoding result based on information about a location of the at least one coded bit in the third coded bit sequence, and corrects the coded bit that encounters an error, to obtain the second decoding result. Alternatively, when the indicator bit is a second value, the receive end corrects, based on the information about the location of the at least one coded bit in the third coded bit sequence, prior information corresponding to the first decoding result, and re-decodes the third coded bit sequence based on corrected prior information, to obtain the second decoding result.

For beneficial effects of the designs, refer to the beneficial effects of corresponding designs in the third aspect. Details are not described herein again.

According to a fifth aspect, an information transmission method is provided, including: A transmit end encodes to-be-transmitted information coded bits by using an LDPC matrix, to obtain a to-be-transmitted coded bit sequence, where the to-be-transmitted coded bit sequence includes a coded bit corresponding to one or more first variable nodes and a coded bit corresponding to one or more second variable nodes, and a column weight corresponding to the second variable node is 1. The transmit end sends the coded bit corresponding to the one or more first variable nodes. The transmit end receives third indication information, where the third indication information indicates at least one second variable node in the one or more second variable nodes (or the third indication information indicates a location of at least one second variable node in the one or more second variable nodes). The transmit end allocates transmit power to the coded bit corresponding to the one or more second variable nodes based on the third indication information. The transmit end sends the coded bit corresponding to the one or more second variable nodes based on the allocated transmit power.

In the solution, after sending the coded bit corresponding to the one or more first variable nodes, the transmit end allocates, based on the third indication information received from the receive end, the transmit power to the coded bit corresponding to the one or more to-be-sent second variable nodes (for example, a coded bit corresponding to a second variable node with high reliability is sent at low power, and a coded bit corresponding to a second variable node with low reliability is sent at high power), so that the coded bit corresponding to the one or more second variable nodes sent by the transmit end can better meet a decoding requirement of the receive end. In this way, decoding and error correction performance of the receive end is improved.

In a possible design, the third indication information includes first information, where the first information indicates a second variable node whose transmit power needs to be increased in the one or more second variable nodes (or the first information indicates a location of the at least one second variable node in the one or more second variable nodes); and/or second information, where the second information indicates a second variable node whose transmit power needs to be decreased in the one or more second variable nodes (or the second information indicates a location of a second variable node whose transmit power needs to be decreased in the one or more second variable nodes).

In this way, the transmit end may determine, based on the third indication information, transmit power of coded bits corresponding to which second variable nodes need to be increased, transmit power of coded bits corresponding to which second variable nodes need to be decreased (for example, if the third indication information includes only the first information, transmit power of a coded bit corresponding to the second variable node indicated by the first information is increased, and transmit power of a coded bit corresponding to another second variable node is decreased; for example, if the third indication information includes only the second information, transmit power of a coded bit corresponding to the second variable node indicated by the second information is decreased, and transmit power of a coded bit corresponding to another second variable node is increased; or for example, if the third indication information includes the first information and the second information, transmit power of a coded bit corresponding to the second variable node indicated by the first information is increased, and transmit power of a coded bit corresponding to the second variable node indicated by the second information is decreased), to meet the decoding requirement of the receive end.

In a possible design, prior information or posterior information corresponding to a first variable node associated with the second variable node whose transmit power needs to be increased is within a first threshold range, and prior information or posterior information corresponding to a first variable node associated with the second variable node whose transmit power needs to be decreased is within a second threshold range, where the first threshold range is different from the second threshold range.

In other words, a second variable node whose transmit power needs to be adjusted may be determined based on a value range of prior information or posterior information corresponding to a first variable node associated with each second variable node.

In a possible design, the prior information includes an LLR or a channel estimation value, and/or the posterior information includes a soft value.

Certainly, this is merely an example, and is actually not limited thereto.

According to a sixth aspect, an information transmission method is provided, including: A receive end receives a fourth to-be-decoded sequence, where the fourth to-be-decoded sequence is a sequence formed by a coded bit transmitted through a channel, where the coded bit is corresponding to one or more first variable nodes, the coded bit corresponding to the one or more first variable nodes is included in a coded bit sequence generated based on an LDPC matrix, the coded bit sequence generated based on the LDPC matrix further includes a coded bit corresponding to one or more second variable nodes, and a column weight corresponding to the second variable node is 1. The receive end decodes the fourth to-be-decoded sequence by using the LDPC matrix. If the decoding fails, the receive end determines at least one second variable node from the one or more second variable nodes (or the receive end determines a location of at least one second variable node from a location of the one or more second variable nodes). The receive end sends third indication information, where the third indication information indicates the at least one second variable node (or the third indication information indicates a location of the at least one second variable node).

In a possible design, the third indication information includes first information, where the first information indicates a second variable node whose transmit power needs to be increased in the one or more second variable nodes (or the first information indicates a location of a second variable node whose transmit power needs to be increased in the one or more second variable nodes); and/or second information, where the second information indicates a second variable node whose transmit power needs to be decreased in the one or more second variable nodes (or the second information indicates a location of a second variable node whose transmit power needs to be decreased in the one or more second variable nodes).

In a possible design, prior information or posterior information corresponding to a first variable node associated with the second variable node whose transmit power needs to be increased is within a first threshold range, and prior information or posterior information corresponding to a first variable node associated with the second variable node whose transmit power needs to be decreased is within a second threshold range, where the first threshold range is different from the second threshold range.

In a possible design, the prior information includes an LLR or a channel estimation value, and/or the posterior information includes a soft value.

For beneficial effects of the designs, refer to the beneficial effects of corresponding designs in the fifth aspect. Details are not described herein again.

According to a seventh aspect, a communication apparatus is provided, including a module configured to perform the method according to any one of the first aspect or the possible designs of the first aspect.

For example, the apparatus includes:

a processing module, configured to generate a to-be-transmitted coded bit sequence; and

a transceiver module, configured to: send a first coded bit sequence based on the to-be-transmitted coded bit sequence, where the to-be-transmitted coded bit sequence includes the first coded bit sequence; receive first indication information, where the first indication information includes information about a location, in the to-be-transmitted coded bit sequence, of at least one sent coded bit in the to-be-transmitted coded bit sequence; and send a second coded bit sequence based on the first indication information, where the to-be-transmitted coded bit sequence includes the second coded bit sequence, and the second coded bit sequence includes the at least one sent coded bit in the to-be-transmitted coded bit sequence and/or at least one unsent coded bit in the to-be-transmitted coded bit sequence.

Optionally, the transceiver module is further configured to retransmit a coded bit sequence at least once based on the to-be-transmitted coded bit sequence. The first coded bit sequence is an initially transmitted coded bit sequence, and the second coded bit sequence is a coded bit sequence retransmitted for the first time. Alternatively, the first coded bit sequence is a coded bit sequence retransmitted for the $(q-1)^{th}$ time, and the second coded bit sequence is a coded bit sequence retransmitted for the $q^{th}$ time, where q is a positive integer greater than 1.

Optionally, the information about the location is an index value of the location of the at least one sent coded bit in the to-be-transmitted coded bit sequence.

Optionally, the information about the location is indication information of at least one resource sub-segment corresponding to the at least one sent coded bit, and the at least one resource sub-segment is located in a resource segment corresponding to the to-be-transmitted coded bit sequence.

Optionally, a proportion of sent coded bits in the second coded bit sequence does not exceed a preset value $\delta$.

Optionally, a quantity of at least one sent coded bit in the second coded bit sequence meets the following condition:

$$
n''_k = \begin{cases} 0 & , & 0 > \dfrac{\delta'(N_{k-1} + n_k) - N''_{k-1}}{1 + \delta'} \\[2ex] \left\lfloor \dfrac{\delta'(N_{k-1} + n_k) - N''_{k-1}}{1 + \delta'} \right\rfloor, & 0 \le \dfrac{\delta'(N_{k-1} + n_k) - N''_{k-1}}{1 + \delta'} \le n_k \\[2ex] n_k & , & n_k < \dfrac{\delta'(N_{k-1} + n_k) - N''_{k-1}}{1 + \delta'} \end{cases}
$$

$n''_k$ is the quantity of the at least one sent coded bit in the to-be-transmitted coded bit sequence included in the second coded bit sequence, $N_{k-1}$ represents a quantity of coded bits sent by the apparatus before the second coded bit sequence, $N''_{k-1}$ represents a quantity of coded bits repeatedly sent by the apparatus before the second coded bit sequence, $n_k$ is a quantity of coded bits included in the second coded bit sequence, and $\delta'$ is a threshold corresponding to a proportion of repeatedly sent coded bits in all coded bit sequences sent by the apparatus based on the to-be-transmitted coded bit sequence, where the proportion of repeatedly sent coded bits in all the coded bit sequences sent by the apparatus based on the to-be-transmitted coded bit sequence does not exceed $\delta'$.

Optionally, $\delta'$ is greater than or equal to a preset threshold.

According to an eighth aspect, a communication apparatus is provided, including a module configured to perform the method according to any one of the second aspect or the possible designs of the second aspect.

For example, the apparatus includes:

a transceiver module, configured to receive a first to-be-decoded sequence, where the first to-be-decoded sequence is a sequence formed by a first coded bit sequence transmitted through a channel, where the first coded bit sequence is sent by a transmit end based on a to-be-transmitted coded bit sequence; and
a processing module, configured to decode the first to-be-decoded sequence.

If the decoding fails, the processing module is further configured to determine first indication information, where the first indication information includes information about a location, in the to-be-transmitted coded bit sequence, of at least one sent coded bit in the to-be-transmitted coded bit sequence.

The transceiver module is further configured to: send the first indication information, and receive a second to-be-decoded sequence, where the second to-be-decoded sequence is a sequence formed by a second coded bit sequence transmitted through a channel, where the second coded bit sequence is sent by the transmit end based on the first indication information.

Optionally, the first coded bit sequence is a coded bit sequence initially transmitted by the transmit end, and the second coded bit sequence is a coded bit sequence retransmitted by the transmit end for the first time. Alternatively, the first coded bit sequence is a coded bit sequence retransmitted by the transmit end for the $(q-1)^{th}$ time, and the second coded bit sequence is a coded bit sequence retransmitted by the transmit end for the $q^{th}$ time, where q is a positive integer greater than 1.

Optionally, the information about the location is an index value of the location of the at least one sent coded bit in the to-be-transmitted coded bit sequence.

Optionally, the processing module is further configured to obtain a log-likelihood ratio LLR sequence corresponding to the first to-be-decoded sequence, where an LLR in the LLR sequence corresponds to a coded bit in the to-be-transmitted coded bit sequence. When determining the first indication information, the processing module is specifically configured to: determine the first $n''_k$ LLRs with smaller amplitudes from the LLR sequence, where $n''_k$ is a positive integer, and $n''_k$ coded bits corresponding to the $n''_k$ LLRs are the at least one sent coded bit in the to-be-transmitted coded bit sequence; and determine the first indication information based on locations of the $n''_k$ coded bits corresponding to the $n''_k$

LLRs in the to-be-transmitted coded bit sequence.

Optionally, the information about the location is information about at least one resource sub-segment corresponding to the at least one sent coded bit, and the at least one resource sub-segment is located in a resource segment corresponding to the to-be-transmitted coded bit sequence.

Optionally, the processing module is further configured to obtain a channel estimation result corresponding to the first to-be-decoded sequence, where a channel estimation value in the channel estimation result corresponds to a coded bit in the to-be-transmitted coded bit sequence. When determining the first indication information, the processing module is specifically configured to: determine, based on the channel estimation result, a channel estimation average value corresponding to each resource sub-segment in the resource segment corresponding to the to-be-transmitted coded bit sequence; determine M resource sub-segments with smaller channel estimation average values from the resource segment corresponding to the to-be-transmitted coded bit sequence, where M is a positive integer; and determine the first indication information based on the M resource sub-segments.

Optionally, a proportion of sent coded bits in the second coded bit sequence does not exceed a preset value $\delta$.

Optionally, a quantity of at least one sent coded bit in the second coded bit sequence meets the following condition:

$$
n''_k = \begin{cases} 0 & , & 0 > \dfrac{\delta'(N_{k-1} + n_k) - N''_{k-1}}{1 + \delta'} \\[3mm] \left\lfloor \dfrac{\delta'(N_{k-1} + n_k) - N''_{k-1}}{1 + \delta'} \right\rfloor, & 0 \le \dfrac{\delta'(N_{k-1} + n_k) - N''_{k-1}}{1 + \delta'} \le n_k \\[3mm] n_k & , & n_k < \dfrac{\delta'(N_{k-1} + n_k) - N''_{k-1}}{1 + \delta'} \end{cases}
$$

$n''_k$ is the quantity of the at least one sent coded bit in the to-be-transmitted coded bit sequence included in the second coded bit sequence, $N_{k-1}$ represents a quantity of coded bits sent by the first communication apparatus before the second coded bit sequence, $N''_{k-1}$ represents a quantity of coded bits repeatedly sent by the transmit end before the second coded bit sequence, $n_k$ is a quantity of coded bits included in the second coded bit sequence, and $\delta'$ is a threshold corresponding to a proportion of repeatedly sent coded bits in all coded bit sequences sent by the transmit end to the apparatus based on the to-be-transmitted coded bit sequence, where the proportion of repeatedly sent coded bits in all the coded bit sequences sent by the transmit end to the apparatus based on the to-be-transmitted coded bit sequence does not exceed $\delta'$.

Optionally, $\delta'$ is greater than or equal to a preset threshold.

According to a ninth aspect, a communication apparatus is provided, including a module configured to perform the method according to any one of the third aspect or the possible designs of the third aspect.

For example, the apparatus includes:

a transceiver module, configured to send a third coded bit sequence, and receive a first decoding result; and
a processing module, configured to determine, based on the first decoding result and an information bit in the third coded bit sequence, a coded bit that encounters a decoding error from the third coded bit sequence, and determine at least one coded bit in the third coded bit sequence based on the coded bit that encounters a decoding error.

The transceiver module is further configured to send second indication information, where the second indication information includes information about a location of the at least one coded bit.

Optionally, the processing module is configured to: when a quantity of coded bits that encounter a decoding error is less than T, use the coded bit that encounters a decoding error as the at least one coded bit; or when a quantity of coded bits that encounter a decoding error is greater than or equal to T, select T coded bits from the coded bits that encounter a decoding error, and use the T coded bits as the at least one coded bit. T is a preset threshold.

Optionally, the second indication information further includes an indicator bit. When the quantity of coded bits that encounter a decoding error is less than T, a value of the indicator bit is a first value. When the quantity of coded bits that encounter a decoding error is greater than or equal to T, a value of the indicator bit is a second value. The first value is different from the second value.

Optionally, T is set to a maximum value that enables $N - 1 \ge \log_2 \sum_{i=1}^{T} \binom{k}{i}$ to be true, where N is an information bit length of the second indication information, and k is a quantity of information bits in a first coded bit sequence.

According to a tenth aspect, a communication apparatus is provided, including a module configured to perform the method according to any one of the fourth aspect or the possible designs of the fourth aspect.
For example, the apparatus includes:

a transceiver module, configured to receive a third to-be-decoded sequence, where the third to-be-decoded sequence is a sequence formed by a third coded bit sequence transmitted through a channel, where the third coded bit sequence is sent by a transmit end; and
a processing module, configured to decode the third to-be-decoded sequence to obtain a first decoding result.

If the decoding fails, the transceiver module is further configured to: send the first decoding result, and receive second indication information, where the second indication information includes information about a location of at least one coded bit in the third coded bit sequence.
The processing module is further configured to obtain a second decoding result based on the second indication information and the first decoding result.
Optionally, the second indication information further includes an indicator bit.
When obtaining the second decoding result based on the second indication information and the first decoding result, the processing module is specifically configured to: when the indicator bit is a first value, determine, based on the information about the location of the at least one coded bit in the third coded bit sequence, a coded bit that encounters an error in the first decoding result, and correct the coded bit that encounters an error, to obtain the second decoding result; or when the indicator bit is a second value, correct, based on the information about the location of the at least one coded bit in the third coded bit sequence, prior information corresponding to the first decoding result, and re-decode the third coded bit sequence based on corrected prior information, to obtain the second decoding result.
According to an eleventh aspect, a communication apparatus is provided, including a module configured to perform the method according to any one of the fifth aspect or the possible designs of the fifth aspect.
For example, the apparatus includes:

a processing module, configured to encode to-be-transmitted information coded bits by using a low-density parity-check LDPC matrix, to obtain a to-be-transmitted coded bit sequence, where the to-be-transmitted coded bit sequence includes a coded bit corresponding to one or more first variable nodes and a coded bit corresponding to one or more second variable nodes, and a column weight corresponding to the second variable node is 1; and
a transceiver module, configured to: send the coded bit corresponding to the one or more first variable nodes, and receive third indication information, where the third indication information indicates at least one second variable node in the one or more second variable nodes.

The processing module is further configured to allocate transmit power to the coded bit corresponding to the one or more second variable nodes based on the third indication information.
The transceiver module is further configured to send the coded bit corresponding to the one or more second variable nodes based on the allocated transmit power.
Optionally, the third indication information includes: first information, where the first information indicates a second variable node whose transmit power needs to be increased in the one or more second variable nodes; and/or second information, where the second information indicates a second variable node whose transmit power needs to be decreased in the one or more second variable nodes.
Optionally, prior information or posterior information corresponding to a first variable node associated with the second variable node whose transmit power needs to be increased is within a first threshold range, and prior information or posterior information corresponding to a first variable node associated with the second variable node whose transmit power needs to be decreased is within a second threshold range, where the first threshold range is different from the second threshold range.
Optionally, the prior information includes an LLR or a channel estimation value, and/or the posterior information includes a soft value.
According to a twelfth aspect, a communication apparatus is provided, including a module configured to perform the method according to any one of the sixth aspect or the possible designs of the sixth aspect.
For example, the apparatus includes:

a transceiver module, configured to receive a fourth to-be-decoded sequence, where the fourth to-be-decoded sequence is a sequence formed by a coded bit transmitted through a channel, where the coded bit is corresponding to one or more first variable nodes, the coded bit corresponding to the one or more first variable nodes is included in a coded bit sequence generated based on an LDPC matrix, the coded bit sequence generated based on the LDPC matrix further includes a coded bit corresponding to one or more second variable nodes, and a column weight corresponding to the second variable node is 1; and

a processing module, configured to decode the fourth to-be-decoded sequence by using the LDPC matrix.

If the decoding fails, the processing module is further configured to determine at least one second variable node from the one or more second variable nodes.

The transceiver module is further configured to send third indication information, where the third indication information indicates the at least one second variable node.

Optionally, the third indication information includes: first information, where the first information indicates a second variable node whose transmit power needs to be increased in the one or more second variable nodes; and/or second information, where the second information indicates a second variable node whose transmit power needs to be decreased in the one or more second variable nodes.

Optionally, prior information or posterior information corresponding to a first variable node associated with the second variable node whose transmit power needs to be increased is within a first threshold range, and prior information or posterior information corresponding to a first variable node associated with the second variable node whose transmit power needs to be decreased is within a second threshold range, where the first threshold range is different from the second threshold range.

Optionally, the prior information includes an LLR or a channel estimation value, and/or the posterior information includes a soft value.

According to a thirteenth aspect, a communication apparatus is provided, including at least one processor and a communication interface communicatively connected to the at least one processor. The at least one processor executes instructions stored in a memory, so that the apparatus performs, through the communication interface, the method in any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect; or any one of the sixth aspect or the possible designs of the sixth aspect.

Optionally, the apparatus further includes the memory. The memory is connected to the at least one processor, and the memory stores the instructions executable by the at least one processor.

According to a fourteenth aspect, a communication apparatus is provided, including an input/output interface and a logic circuit. The input/output interface is configured to output a coded bit sequence or input a to-be-decoded sequence, and the logic circuit is configured to perform the method in any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, or any one of the sixth aspect or the possible designs of the sixth aspect.

According to a fifteenth aspect, a computer-readable storage medium is provided, including a program or instructions. When the program or the instructions are run on a computer, the method in any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, or any one of the sixth aspect or the possible designs of the sixth aspect is performed.

According to a sixteenth aspect, a computer program product is provided, including instructions. When the instructions are run on a computer, the method in any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, or any one of the sixth aspect or the possible designs of the sixth aspect is performed.

## BRIEF DESCRIPTION OF DRAWINGS

FIG. 1 is a diagram of a communication system to which an embodiment of this application is applicable;

FIG. 2 is a schematic flowchart of communication between a transmit end and a receive end;

FIG. 3 is a diagram of a raptor-like LDPC code;

FIG. 4 is a diagram of a possible IR-HARQ scheme;

FIG. 5A is a schematic flowchart of an information transmission method according to an embodiment of this application;

FIG. 5B, FIG. 5C, and FIG. 5D are diagrams of performance evaluation of decoding by using the solution shown in FIG. 5A;

FIG. 6A is a schematic flowchart of another information transmission method according to an embodiment of this application;

FIG. 6B, and FIG. 6C are diagrams of performance evaluation of decoding by using the solution shown in FIG. 6A;

FIG. 7A is a schematic flowchart of another information transmission method according to an embodiment of this application;

FIG. 7B is a diagram of performance evaluation of decoding by using the solution shown in FIG. 7A;

FIG. 8 is a diagram of a structure of a communication apparatus 800 according to an embodiment of this application;

FIG. 9 is a diagram of a structure of another communication apparatus 900 according to an embodiment of this application; and

FIG. 10 is a diagram of a structure of another communication apparatus 1000 according to an embodiment of this application.


## DESCRIPTION OF EMBODIMENTS

The terms "system" and "network" may be used interchangeably in embodiments of this application. "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items" or a similar expression thereof means any combination of these items, including any combination of a single item or a plurality of items. For example, at least one item of a, b, or c may represent a, b, c, a and b, b and c, a and c, or a, b, and c.

In addition, unless otherwise stated, ordinal numbers such as "first" and "second" in embodiments of this application are for distinguishing between a plurality of objects, but are not intended to limit an order, a time sequence, priorities, or importance of the plurality of obj ects. For example, a first priority criterion and a second priority criterion are merely used for distinguishing between different criteria, but do not indicate different content, priorities, or importance degrees of the two types of criteria.

The technical solutions in embodiments of this application may be applied to various communication systems, for example, a narrowband internet of things (NarrowBand Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access 2000, CDMA2000) system, a time division-synchronous code division multiple access (Time Division-Synchronous Code Division Multiple Access, TD-SCDMA) system, a long term evolution (Long Term Evolution, LTE) system, a 5th generation (5th generation, 5G) communication system (including three application scenarios of the 5G communication system: enhanced mobile broadband (Enhanced Mobile Broadband, eMBB), ultra-reliable low-latency communication (Ultra-Reliable Low-Latency Communication, URLLC), and enhanced machine type communication (Enhanced Machine Type Communication, eMTC)), a 6th generation (6th generation, 6G) communication system, another future evolved system, and other wireless communication systems. The technical solutions in embodiments of this application may be applied to a communication system, provided that there is a HARQ requirement in the communication system.

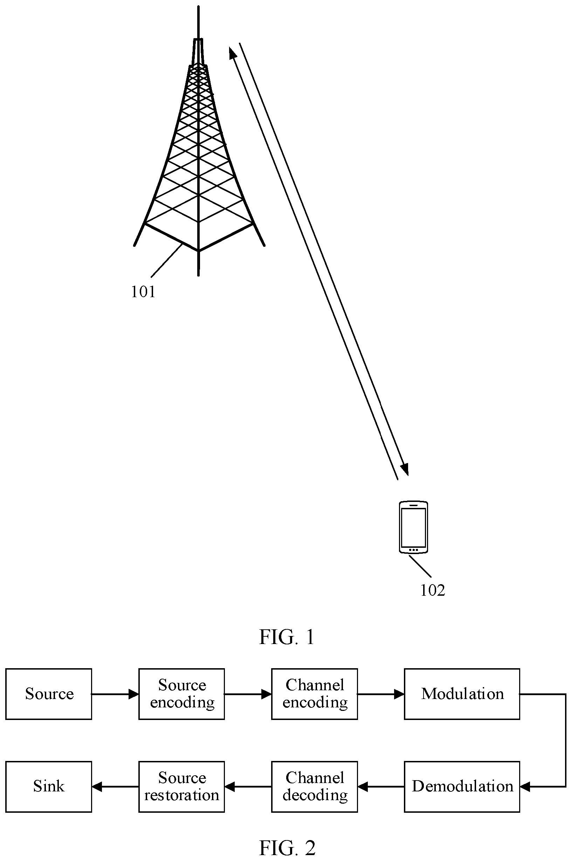

For example, FIG. 1 is a diagram of a communication system to which an embodiment of this application is applicable. The communication system includes a network device 101 and a terminal device 102. The network device 101 may send data to the terminal device 102, and the terminal device 102 may send feedback information to the network device 101 after receiving the data. Alternatively, the terminal device 102 may send data to the network device 101, and the network device 101 may send feedback information to the terminal device 102 after receiving the data. When the network device 101 sends the data to the terminal device 102, the network device 101 is a transmit end (or a sending device), and the terminal device 102 is a receive end (or a receiving device). When the terminal device 102 sends the data to the network device 101, the terminal device 102 is a transmit end (or a sending device), and the network device 101 is a receive end (or a receiving device).

The terminal device includes a device that provides a voice and/or data signal connectivity for a user. Specifically, the terminal device includes a device that provides the voice for the user, includes a device that provides the data signal connectivity for the user, or includes a device that provides the voice and the data connectivity for the user. For example, the terminal device may include a handheld device with a wireless connection function or a processing device connected to a wireless modem. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal) device, an access terminal (access terminal) device, a user terminal (user terminal) device, a user agent (user agent), a user device (user device), a satellite, an uncrewed aerial vehicle, a balloon, an aircraft, or the like. For example, the terminal device may include a mobile phone (or referred to as a "cellular" phone), a computer having a mobile terminal device, or a portable, pocket-sized, handheld, or a computer-embedded mobile apparatus. For example, the terminal device may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. By way of example and not limitation, in embodiments of this application, the terminal device may alternatively be a wearable device. The wearable device may also be referred to as a wearable intelligent device, an intelligent wearable device, or the like, and is a general term for wearable devices developed by intelligently designing everyday wearing by applying a wearable technology. If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs).

The network device includes, for example, an access network (access network, AN) device such as a base station (for example, an access point), and may be a device that communicates with a wireless terminal device through an air interface in one or more cells in an access network. Alternatively, the network device is, for example, a road side unit (road side unit, RSU) in a vehicle-to-everything (vehicle-to-everything, V2X) technology. The network device may include an evolved NodeB (NodeB or eNB or e-NodeB, evolved NodeB) in a long term evolution (long term evolution, LTE) or long term evolution-advanced (long term evolution-advanced, LTE-A) system, may include a next generation NodeB (next generation NodeB, gNB) in an evolved packet core (evolved packet core, EPC), a 5th generation (the 5th generation, 5G) mobile communication technology, or a new radio (new radio, NR) system (also referred to as an NR system for short), or may include a central unit (central unit, CU) and a distributed unit (distributed unit, DU) in a cloud radio access network (cloud radio access network, Cloud RAN) system, a satellite, an uncrewed aerial vehicle, a balloon, an aircraft, or the like. This is not limited in embodiments of this application.

It may be understood that communication between the network device and the terminal device is used as an example in FIG. 1. Embodiments of this application may be further applied to other scenarios such as communication between network devices and communication between terminal devices. This is not limited in this application.

FIG. 2 is a schematic flowchart of communication between a transmit end and a receive end.

Generally, a data bit stream generated by a source reaches a sink through the following steps: First, at the transmit end, the source is a source that generates information, for example, a person, a machine, or an object in nature, and an output of the source may be an analog signal or a digital signal; source encoding is performed to convert the analog signal or the digital signal into a binary digital sequence (namely, an information bit sequence); channel encoding is performed to introduce some redundant binary information sequences into the binary digital sequence (to obtain a coded bit sequence), to overcome errors resulting from channel noise and interference during transmission at the receive end; and modulation is performed to convert the binary sequence into a waveform signal, to send the waveform signal to a channel. After the waveform signal is transmitted through a channel, at the receive end, demodulation is performed to restore the waveform signal to a binary signal (namely, a to-be-decoded sequence); channel decoding is performed to restore the information bit sequence according to a channel encoding rule and redundancy of received data; and source decoding is performed to restore the original signal according to a source encoding rule.

Certainly, the foregoing process is merely an example. An actual communication procedure may further include other processing, for example, interleaving (where the interleaving may occur after the channel encoding and before the modulation, and is used to change a structure of the bit stream to fully diverge these errors, to cause long string bit errors to become short string errors) and de-interleaving (where the de-interleaving, which is a reverse operation of the interleaving, occurs after the demodulation and before the channel decoding, and is used to centralize scattered data to a codeword obtained by performing encoding through a same channel, to reduce impact of burst errors on the channel encoding).

There may be a plurality of channel encoding schemes ("encoding" for short hereinafter) in embodiments of this application, for example, a low-density parity-check code (Low-Density Parity-Check Code, LDPC) and a polar (Polar) code. This is not limited in embodiments of this application.

For ease of description, an LDPC encoding scheme is mainly used as an example in this specification. Given an information bit sequence $s=[s(0), s(2), ..., s(K-1)]$, LDPC encoding is to determine M check bits $p=[p(0), p(1), ..., p(M-1)]$, and an obtained LDPC code (namely, a coded bit sequence) is $c=[sp]$. It can be learned that the coded bit sequence obtained through LDPC encoding includes a coded bit sequence and a check bit sequence. A linear block code whose code length is equal to N and whose information bit sequence length is equal to K may be uniquely determined by a check matrix thereof. A check matrix of the LDPC code may also be referred to as an LDPC matrix. Each column in the check matrix corresponds to one variable node and one bit in the coded bit sequence. Each row in the check matrix corresponds to one check node.

In a communication system, after receiving data sent by the transmit end, the receive end feeds back only 1-bit information (ACK/NACK), to indicate whether the receive end succeeds in decoding. When receiving an ACK, the transmit end stops sending. When the transmit end receives a NACK, there are two common manners: 1. re-sending a previous data packet (namely, a simple retransmission (Chase Combining)); and 2. sending a new data packet, and equivalently constructing, by the receive end, a nested long code by using the previous data packet and the new data packet (this manner is referred to as incremental redundancy-hybrid automatic repeat request (Incremental Redundancy-Hybrid Automatic Repeat request, IR-HARQ)). For the LDPC code, the polar code, and the like, performance of an IR-HARQ scheme is good.

The following describes the IR-HARQ scheme by using an LDPC code of a raptor-like structure (Raptor-like LDPC code for short) as an example.

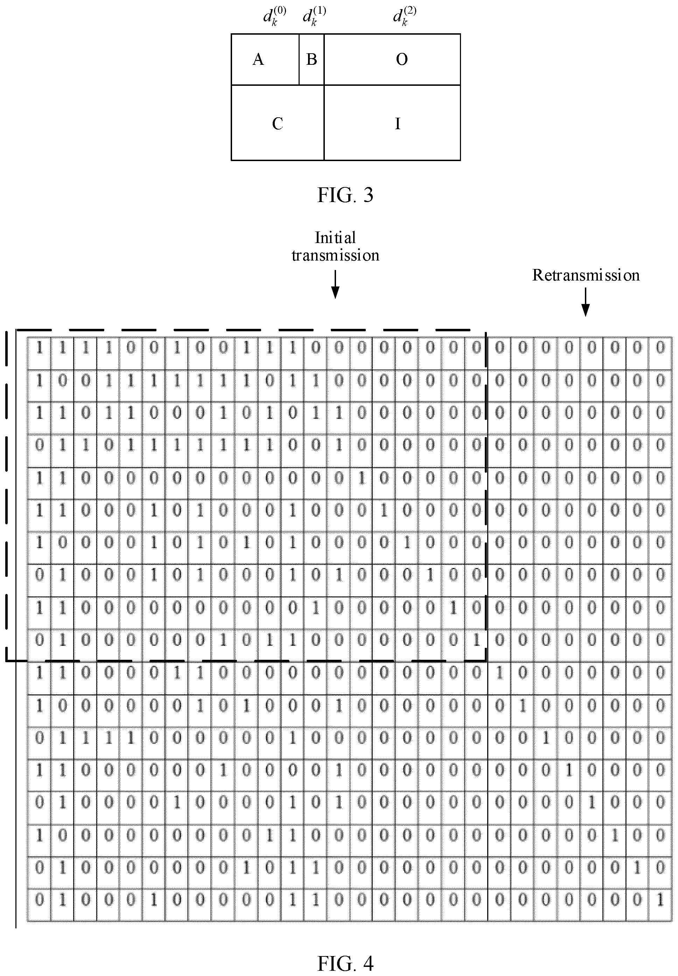

Refer to FIG. 3. A check matrix of a raptor-like LDPC code includes five parts: A, B, C, O, and I. A is a matrix block corresponding to an information bit sequence in a highest bit rate check matrix. B is a matrix block corresponding to a check bit sequence in the highest bit rate check matrix, and a matrix structure corresponding to B is usually a lower triangular structure or a combined structure of three column weights and double diagonals. C is a matrix block extended from the highest bit rate check matrix, and corresponds to the information bit sequence and the check bit sequence in the highest bit rate check matrix. O is a zero matrix, I is a matrix whose diagonal is 1 and remaining parts are 0, and O and I correspond to the check bit sequence. A bit sequence obtained by encoding information data by using the raptor-like LDPC matrix is segmented into an information bit sequence $d_k^{(0)}$, a check bit $d_k^{(1)}$ whose column weight is greater than 1, and a check bit $d_k^{(2)}$ whose column weight is 1. The check bit $d_k^{(2)}$ whose column weight is 1 is a check bit sequence corresponding to a column whose column weight is 1 in the check matrix. The check bit $d_k^{(1)}$ whose column weight is greater than 1 is a check bit sequence corresponding to a column whose column weight is greater than 1 in the check matrix.

In the IR-HARQ scheme, a retransmitted coded bit is a check bit in the part I (a column weight of the retransmitted coded bit is 1). A variable node corresponding to the part I may be referred to as a raptor-like node, and a corresponding column weight is 1.

For example, FIG. 4 is a diagram of a possible IR-HARQ scheme.

Variable nodes inside a dashed box correspond to coded bits during initial transmission (initial transmission part for short), and variable nodes outside the dashed box correspond to coded bits during retransmission (retransmission part for short). The initial transmission part may be separately used as a code, or the initial transmission part and the retransmission part may be combined together as a longer code. The coded bits in the retransmission part correspond to raptor-like nodes, namely, variable nodes whose column weights are 1, and are associated with only one check equation. When decoding of the initial transmission fails, a transmit end sends the coded bits of these raptor-like nodes. In a decoding process, a receive end performs combined decoding on to-be-decoded sequences received in an initial transmission process and a retransmission process, and performs error correction by using a larger check matrix and more check equations than those in the initial transmission, to achieve error correction performance of a long code.

It may be understood that, in the IR-HARQ scheme, the coded bits sent in the retransmission process are different from the coded bits sent in the initial transmission process (in other words, the coded bits sent in the retransmission process are all sent for the first time, in other words, have not been sent before).

In addition, the retransmission is actually not limited to being performed once, and may be performed for a plurality of times (for example, different check bits in the part I may be sent for a plurality of times). The receive end performs combined decoding on all received decoding sequences each time, and continues a next retransmission process after the decoding fails, until a maximum quantity of retransmissions is reached or decoding succeeds.

It can be learned from the foregoing descriptions that, in a design of 1-bit feedback information, the receive end feeds back only a 1-bit NACK or ACK. Regardless of whether a decoding error occurs at the receive end, after receiving a NACK, the transmit end cannot perform a targeted retransmission design depending on whether a decoding error occurs, and therefore cannot fully utilize an error correction and detection capability of the receive end, resulting in poor decoding and error correction performance of the receive end.

In view of this, the technical solutions in embodiments of this application are provided. When decoding fails, the receive end may feed back more information, so that the transmit end performs targeted retransmission based on the information, thereby improving decoding and error correction performance of the receive end.

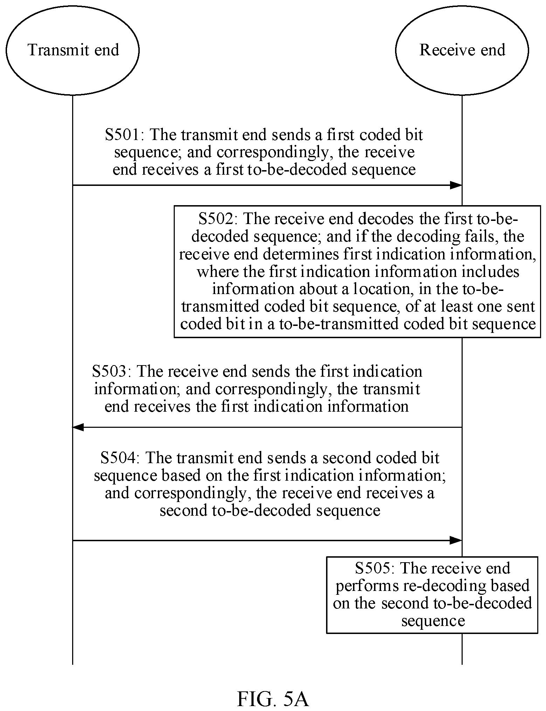

FIG. 5A is a schematic flowchart of an information transmission method according to an embodiment of this application. The method includes the following steps.

S501: A transmit end sends a first coded bit sequence based on a to-be-transmitted coded bit sequence, where the to-be-transmitted coded bit sequence includes the first coded bit sequence; and correspondingly, a receive end receives a first to-be-decoded sequence.

The transmit end encodes to-be-transmitted information bits to generate the to-be-transmitted coded bit sequence. An encoding scheme used by the transmit end includes but is not limited to an LDPC type, a polar type, and the like. For ease of description, in this embodiment, a raptor-like LDPC encoding scheme is used as an example. To be specific, after obtaining a to-be-transmitted information bit sequence, the transmit end generates the to-be-transmitted coded bit sequence based on a raptor-like LDPC matrix.

In this embodiment of this application, a process in which the transmit end sends a coded bit sequence for the first time based on the to-be-transmitted coded bit sequence is an initial transmission process. If the initial transmission fails, the transmit end re-sends a coded bit sequence, and a process in which the transmit end sends the coded bit sequence after the initial transmission is a retransmission process. A quantity of retransmissions may be one or more. This is not limited in this application.

The first coded bit sequence may be a coded bit sequence sent in the initial transmission process, or may be a coded bit sequence sent in the retransmission process. This is not limited in this application.

For example, it is assumed that the transmit end performs a maximum of t retransmissions. The first coded bit sequence may be a coded bit sequence initially transmitted by the transmit end, or a coded bit sequence retransmitted for the $(q-1)^{th}$ time, and q is a positive integer greater than 1 and less than or equal to t.

Alternatively, in another description, it is assumed that the transmit end performs a maximum of t retransmissions, and the transmit end repeatedly sends the coded bit sequence for a maximum of t+1 times plus the initial transmission. The first coded bit sequence may be a coded bit sequence sent by the transmit end for the $(k-1)^{th}$ time, and k is a positive integer greater than 1 and less than or equal to t+1.

Correspondingly, the receive end may repeatedly receive a to-be-decoded sequence. Specifically, each time the transmit end sends the coded bit sequence, the receive end correspondingly receives a to-be-decoded sequence. The first to-be-decoded sequence corresponds to the first coded bit sequence. To be specific, the first to-be-decoded sequence is a sequence formed by the first coded bit sequence transmitted through a channel, where the first coded bit sequence is sent by the transmit end based on the to-be-transmitted coded bit sequence.

It may be understood that, before sending the first coded bit sequence, the transmit end may further perform modulation or other processing on the first coded bit sequence. After being converted into a waveform signal, the first coded bit sequence is transmitted to the channel (or a carrier) for transmission. In a transmission process, the waveform signal may be deformed to some extent due to path loss, noise interference, or other impact. Therefore, a waveform signal received by the receive end may be different from the waveform signal sent by the transmit end. Correspondingly, after receiving the waveform signal, the receive end performs demodulation or other processing on the waveform signal to obtain the first to-be-decoded sequence corresponding to the first coded bit sequence. For ease of description, the foregoing process is described as follows in this specification: The transmit end sends the first coded bit sequence, and the receive end receives the first to-be-decoded sequence.

S502: The receive end decodes the first to-be-decoded sequence; and if the decoding fails, the receive end determines first indication information.

Specifically, the receive end decodes the first to-be-decoded sequence according to a decoding scheme corresponding to the encoding scheme of the transmit end, for example, performs iterative decoding on the first to-be-decoded sequence by using the raptor-like LDPC matrix.

It may be understood that, if the first to-be-decoded sequence is a to-be-decoded sequence received in the initial transmission process (in other words, the first coded bit sequence is the coded bit sequence sent in the initial transmission process), the receive end may directly decode the first to-be-decoded sequence; or if the first to-be-decoded sequence is a to-be-decoded sequence received in the retransmission process (in other words, the first coded bit sequence is the coded bit sequence sent in the retransmission process), the receive end may perform combined decoding on the first to-be-decoded sequence that is received currently and another to-be-decoded sequence that is previously received.

If the decoding succeeds, for example, $cH^T=0$ (c represents a decoded codeword, and H represents the raptor-like LDPC matrix), decoding is stopped.

It should be understood that $cH^T=0$ is a necessary but insufficient condition for successful decoding, that is, $cH^T=0$ is merely an example. Actually, another determining condition further needs to be met for the successful decoding. This is not limited in this application.

Optionally, the receive end may further send an ACK, to indicate that the decoding succeeds.

If the decoding fails, for example, $cH^T \neq 0$, the receive end determines the first indication information.

It should be understood that $cH^T \neq 0$ is merely an example. Actually, the decoding may fail for other reasons. This is not limited in this application.

The first indication information may include information about a location, in the to-be-transmitted coded bit sequence, of at least one sent coded bit in the to-be-transmitted coded bit sequence. The coded bit (namely, the at least one sent coded bit in the coded bit sequence) indicated by the first indication information may be understood as a coded bit that the receive end expects the transmit end to re-send in a next transmission process.

In this embodiment of this application, the information about the location of the at least one sent coded bit in the to-be-transmitted coded bit sequence may be an index value of the location of the at least one sent coded bit in the to-be-transmitted coded bit sequence (or a location number of the at least one coded bit in the to-be-transmitted coded bit sequence).

Certainly, the information about the location may alternatively be other information related to the location of the at least one sent coded bit in the to-be-transmitted coded bit sequence. This is not limited in this application. In a possible design, a resource segment corresponding to the to-be-transmitted coded bit sequence may be segmented, for example, segmented into a plurality of resource sub-segments, where each resource sub-segment includes one or more contiguous resource elements, and the information about the location of the at least one sent coded bit in the to-be-transmitted coded bit sequence may be indication information of at least one resource sub-segment corresponding to the at least one sent coded bit. In this way, a feedback amount of the receive end can be reduced, and resource overheads are reduced.

In an example, the resource segment may be a continuous time period. For example, if the resource element is one slot, the resource sub-segment may be several consecutive slots, and the resource segment is a period of time (for example, one or more consecutive frames) longer than the resource sub-segment.

In an example, the resource segment may be a segment of contiguous sub-carriers. For example, if the resource element is one sub-carrier, the resource sub-segment may be several contiguous sub-carriers, and the resource segment is a segment of contiguous sub-carriers (for example, one or more contiguous carriers) longer than the resource sub-segment.

In an example, the resource segment may alternatively be a segment of contiguous sub-channels similar to that in an LDPC code or a polar code. For example, if the resource element is one sub-channel, the resource sub-segment may be several contiguous sub-channels, and the resource segment is a segment of contiguous sub-channels (for example, one or more contiguous channels) longer than the resource sub-segment.

Certainly, the several types are merely examples. During actual application, the resource element, the resource segment, and the resource sub-segment may be defined in another manner. This is not limited in this application.

During specific implementation, the receive end may select the at least one sent coded bit based on prior information or posterior information used in a decoding process.

In a possible design, the receive end obtains a log-likelihood ratio (Log-Likelihood-Ration, LLR) sequence corresponding to the first to-be-decoded sequence, where an LLR in the LLR sequence corresponds to a coded bit in the to-be-transmitted coded bit sequence. The receive end determines the first $n''_k$ LLRs with smaller amplitudes in the LLR sequence, where $n''_k$ is a positive integer, and $n''_k$ coded bits corresponding to the $n''_k$ LLRs are a quantity of sent coded bits that can be sent by the transmit end in a next (for example, $k^{th}$) sending process (namely, a quantity of sent coded bits in the to-be-transmitted coded bit sequence included in a second coded bit sequence). The receive end determines the first indication information based on locations of the $n''_k$ coded bits corresponding to the $n''_k$ LLRs in the to-be-transmitted coded bit sequence. For example, the first indication information includes index values of the locations of the $n''_k$ coded bits in the to-be-transmitted coded bit sequence.

In a possible design, the receive end obtains a channel estimation result corresponding to the first to-be-decoded sequence, where a channel estimation value in the channel estimation result (it may be understood that the channel estimation value is h and is a complex number, and the channel estimation value in the specification is actually a modulus of h, that is, |h|) corresponds to a coded bit in the to-be-transmitted coded bit sequence. The receive end determines, based on the channel estimation result, a channel estimation average value corresponding to each resource sub-segment in the resource segment corresponding to the to-be-transmitted coded bit sequence. The receive end determines M resource sub-segments with smaller channel estimation average values from the resource segment corresponding to the to-be-transmitted coded bit sequence, where M is a positive integer. The receive end determines the first indication information based on the M resource sub-segments. For example, the first indication information includes information about the M resource sub-segments, for example, specifically includes index values of the M resource sub-segments. It may be understood that, assuming that $\Delta$ is a segment interval (namely, a quantity of resource elements included in each resource sub-segment) of the resource segment, and a quantity of coded bits corresponding to each resource element is a, a quantity of coded bits that may be indicated by the first indication information is $a \times \Delta \times M$. A value of a is not limited in this application, for example, a=2.

For example, it is assumed that an initial transmission code length is $N_0$, a maximum of $t$ feedbacks are performed, and a total sending code length is $N$. It is assumed that a total quantity of first k - 1 sent coded bits is $N_{k-1}$, and $N_{k-1}$ includes $N'_{k-1}$ coded bits sent for the first time and $N''_{k-1}$ repeatedly sent coded bits ($N_{k-1} = N'_{k-1} + N''_{k-1}$); a log-likelihood ratio obtained after the k - 1 times of sending is $[LLR_{k-1}]_{1 \times N'_{k-1}}$; and $n_k$ coded bits need to be sent in a $k^{th}$ time of sending. It is assumed that the segment interval of the resource segment is $\Delta$, and a channel estimation average value of an $i^{th}$ resource sub-segment is $\bar{h}_i = \sum_{j=(i-1)\Delta+1}^{j=i\Delta} |h_j|$, where $1 \le i \le \lceil N_{k-1}/2\Delta \rceil$. In this case, information

about $\lceil n_k/2\Delta \rceil$ resource sub-segments is selected based on the channel estimation average value $\bar{h}_i$ and fed back to the transmit end.

It may be understood that the foregoing uses an example in which all coded bits in the second coded bit sequence have been sent. If the second coded bit sequence further includes an unsent coded bit, $n_k$ in $\lceil n_k/2\Delta \rceil$ may be replaced with $n''_k$, and $n''_k$ is a quantity of sent coded bits that can be sent by the transmit end in a $k^{th}$ sending process.

S503: The receive end sends the first indication information; and correspondingly, the transmit end receives the first indication information.

Optionally, the receive end further sends a NACK, to indicate that the receive end fails in decoding. The NACK and the first indication information may be carried in a same message, or may be separately carried in different messages. This is not limited in this application.

S504: The transmit end sends the second coded bit sequence based on the first indication information, where the to-be-transmitted coded bit sequence includes the second coded bit sequence; and correspondingly, the receive end receives a second to-be-decoded sequence, where the second to-be-decoded sequence is a sequence formed by the second coded bit sequence transmitted through a channel, where the second coded bit sequence is sent by the transmit end based on the first indication information.

The second coded bit sequence includes the at least one sent coded bit in the to-be-transmitted coded bit sequence and/or at least one unsent coded bit in the to-be-transmitted coded bit sequence.

It may be understood that the second coded bit sequence herein is a $1^{st}$ coded bit sequence sent by the transmit end after the first coded bit sequence. In other words, there is no other coded bit sequence between the first coded bit sequence and the second coded bit sequence.

For example, it is assumed that the transmit end performs a maximum of t retransmissions. The first coded bit sequence is a coded bit sequence initially transmitted by the transmit end, and the second coded bit sequence is a coded bit sequence retransmitted by the transmit end for the first time. Alternatively, the first coded bit sequence is a coded bit sequence retransmitted by the transmit end for the $(q-1)^{th}$ time, and the second coded bit sequence is a coded bit sequence retransmitted by the transmit end for the $q^{th}$ time, where q is a positive integer greater than 1 and less than or equal to t.

Alternatively, for another example, it is assumed that the transmit end performs a maximum of t retransmissions. In this case, the transmit end sends a maximum of t+1 coded bit sequences with the initial transmission. The first coded bit sequence is a coded bit sequence sent by the transmit end for the $(k-1)^{th}$ time, and the second coded bit sequence is a coded bit sequence sent by the transmit end for the $k^{th}$ time, where k is a positive integer greater than 1 and less than or equal to t+1.

In the IR-HARQ scheme shown in FIG. 4, when there is only 1-bit feedback information, the receive end feeds back only a NACK after decoding fails, and the coded bits in the retransmission part sent by the transmit end are all unsent coded bits in the to-be-transmitted coded bit sequence.

However, in this embodiment, because the receive end feeds back more feedback information, namely, the first indication information, the transmit end may perform targeted retransmission based on the first indication information, so that the second coded bit sequence can include the at least one sent coded bit in the to-be-transmitted coded bit sequence, thereby fully utilizing an error correction and detection capability of the receive end, and improving decoding and error correction performance of the receive end.

It may be understood that, when the first coded bit sequence and the second coded bit sequence are respectively coded bit sequences sent by the transmit end for the $(k-1)^{th}$ time and the $k^{th}$ time, and k is greater than 2, if the second coded bit sequence includes the at least one sent coded bit in the to-be-transmitted coded bit sequence, the at least one sent coded bit may include:

a coded bit in the coded bit sequence (first coded bit sequence) sent by the transmit end for the $(k-1)^{th}$ time, and/or a coded bit in a coded bit sequence sent by the transmit end before the $(k-1)^{th}$ time.

For example, k=3. The second coded bit sequence is a coded bit sequence sent by the transmit end for the third time based on the to-be-transmitted coded bit sequence. If the second coded bit sequence includes the at least one sent coded bit in the to-be-transmitted coded bit sequence, the at least one sent coded bit may be a coded bit in a coded bit sequence sent by the transmit end for the second time based on the to-be-transmitted coded bit sequence, may be a coded bit in a coded bit sequence sent by the transmit end for the first time based on the to-be-transmitted coded bit sequence, or may be partially a coded bit in the coded bit sequence sent for the second time, and partially a coded bit in the coded bit sequence sent for the first time.

Certainly, during specific implementation, the second coded bit sequence may alternatively include the at least one unsent coded bit in the to-be-transmitted coded bit sequence, or includes both the at least one sent coded bit in the to-be-transmitted coded bit sequence and the at least one unsent coded bit in the to-be-transmitted coded bit sequence.

A proportion of sent coded bits in the second coded bit sequence may be determined based on a system resource configuration status.

In a possible design, a proportion of sent coded bits in the second coded bit sequence does not exceed a preset value $\delta$.

During specific implementation, the preset value $\delta$ is a fixed value. For example, it is assumed that the transmit end performs a maximum of t retransmissions, and the transmit end repeatedly sends the coded bit sequence for a maximum of t+1 times plus the initial transmission. A proportion of sent coded bits in the coded bit sequence sent in each time of the t+1 times for the coded bit sequence does not exceed the preset value $\delta$.

During specific implementation, the preset value $\delta$ may alternatively change dynamically.

For example, it is assumed that the transmit end performs a maximum of t retransmissions, and the transmit end repeatedly sends the coded bit sequence for a maximum of t+1 times plus the initial transmission. The first coded bit sequence is the coded bit sequence sent by the transmit end for the (k-1)$^{th}$ time, and the second coded bit sequence is the coded bit sequence sent by the transmit end for the k$^{th}$ time. Assuming that a proportion of coded bits repeatedly sent by the transmit end in a maximum of t+1 sending processes does not exceed $\delta'$, a proportion $\delta$ of sent coded bits in the second coded bit sequence sent by the transmit end in the k$^{th}$ sending process may be determined based on $\delta'$, a quantity $N''_{k-1}$ of coded bits repeatedly sent in the first k-1 sending processes, a quantity $N_{k-1}$ of coded bits sent in the first k-1 sending processes, and a total quantity $n_k$ of coded bits that can be sent in the k$^{th}$ sending process:

$$\delta \leq \frac{\delta'(N_{k-1} + n_k) - N''_{k-1}}{n_k}$$

It may be understood that, if $\delta'(N_{k-1} + n_k) - N''_{k-1}$ is less than 0, $\delta$ is 0.

Correspondingly, the transmit end may determine, based on $\delta$ and the total quantity $n_k$ of coded bits that can be sent in the k$^{th}$ sending process, a quantity $n''_k$ of sent coded bits that can be sent in the k$^{th}$ sending process: $n''_k \leq \delta' \times n_k$.

In this way, it can be ensured that proportions of coded bits (namely, coded bits other than sent coded bits) sent for the first time and coded bits (namely, sent coded bits) not sent for the first time in all sending processes (for example, the maximum of t+1 sending processes) of to-be-transmitted coded bits are properly allocated (for example, the proportion of coded bits repeatedly sent in the maximum of t+1 sending processes does not exceed $\delta'$), thereby avoiding a problem of poor decoding and error correction performance caused by an excessively small proportion of sent coded bits, and avoiding a problem of a large quantity of occupied transmission resources caused by an excessively large proportion of sent coded bits.

In another possible design, alternatively, a quantity $n''_k$ of sent coded bits in the k$^{th}$ sending process (namely, a quantity of at least one sent coded bit in the second coded bit sequence) may be directly determined based on a status of the first k-1 times of sending, a total quantity $n_k$ of coded bits that can be sent in the k$^{th}$ sending process, and $\delta'$:

$$n''_k = \begin{cases} 0 & , & 0 > \dfrac{\delta'(N_{k-1} + n_k) - N''_{k-1}}{1 + \delta'} \\[4mm] \left\lfloor \dfrac{\delta'(N_{k-1} + n_k) - N''_{k-1}}{1 + \delta'} \right\rfloor, & 0 \leq \dfrac{\delta'(N_{k-1} + n_k) - N''_{k-1}}{1 + \delta'} \leq n_k \\[4mm] n_k & , & n_k < \dfrac{\delta'(N_{k-1} + n_k) - N''_{k-1}}{1 + \delta'} \end{cases}$$

$n''_k$ is the quantity of at least one sent coded bit in the to-be-transmitted coded bit sequence included in the second coded bit sequence (namely, the coded bit sequence sent for the k$^{th}$ time), $N_{k-1}$ represents a quantity of coded bits sent by the transmit end before the second coded bit sequence (in other words, in the first k times), $N''_{k-1}$ represents a quantity of coded bits repeatedly sent by the transmit end before the second coded bit sequence, $n_k$ is a quantity of coded bits included in the second coded bit sequence, and $\delta'$ is a threshold corresponding to a proportion of repeatedly sent coded bits in all coded bit sequences sent by the transmit end based on the to-be-transmitted coded bit sequence, where the proportion of repeatedly sent coded bits in all the coded bit sequences sent by the transmit end based on the to-be-transmitted coded bit sequence does not exceed $\delta'$.

In this way, it can be ensured that proportions of coded bits sent for the first time and coded bits not sent for the first time in all sending processes of to-be-transmitted coded bits are properly allocated (for example, the proportion of repeatedly sent coded bits does not exceed $\delta'$), thereby avoiding a problem of poor decoding and error correction performance caused by an excessively small proportion of sent coded bits, and avoiding a problem of a large quantity of occupied transmission resources caused by an excessively large proportion of sent coded bits.

After determining the $n''_k$ sent coded bits and $n'_k$ unsent coded bits that need to be sent in the k$^{th}$ sending process

($n'_k=n_k - n''_k$), the transmit end obtains the second coded bit sequence, and then may send the second coded bit sequence.

In a possible design, $\delta'$ is greater than or equal to a preset threshold. During specific implementation, the preset threshold may be inversely proportional to an initial transmission bit rate. In this way, decoding and error correction performance of the receive end can be further improved.

S505: The receive end performs re-decoding based on the second to-be-decoded sequence.

Specifically, if the first coded bit sequence is the initially transmitted coded bit sequence (for example, the second coded bit sequence is the coded bit sequence sent by the transmit end for the $(k-1)^{th}$ time, where k=2), the receive end combines the second coded bit sequence and the first coded bit sequence, and performs iterative decoding on a combined coded bit sequence.

If the first coded bit sequence is not the initially transmitted coded bit sequence, that is, there is another coded bit sequence before the first coded bit sequence (for example, the second coded bit sequence is the coded bit sequence sent by the transmit end for the $(k-1)^{th}$ time, where k>2), the receive end combines the first coded bit sequence, the second coded bit sequence, and the another previously received coded bit sequence (that is, combines all of the coded bit sequences received in the first k times), and performs iterative decoding on a combined coded bit sequence. For example, the receive end obtains a new LLR sequence, and performs decoding based on the new LLR.

Further, if the re-decoding fails and the maximum quantity t of retransmissions is not reached, the receive end may continue to determine new indication information according to the method described in S502, and send the new indication information to the transmit end, so that the transmit end sends a coded bit sequence again (namely, for the $(k+1)^{th}$ time) based on the new indication information, until the receive end succeeds in decoding or the maximum quantity of retransmissions is reached.

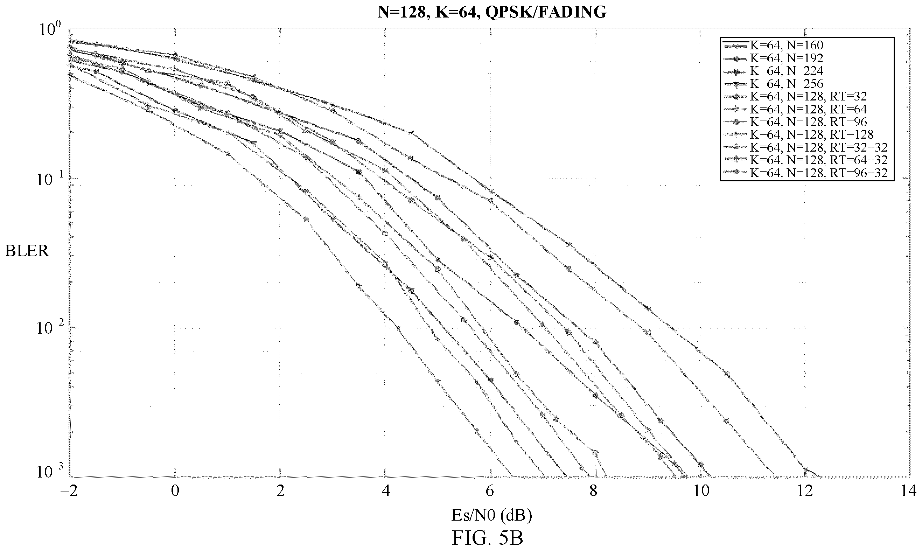

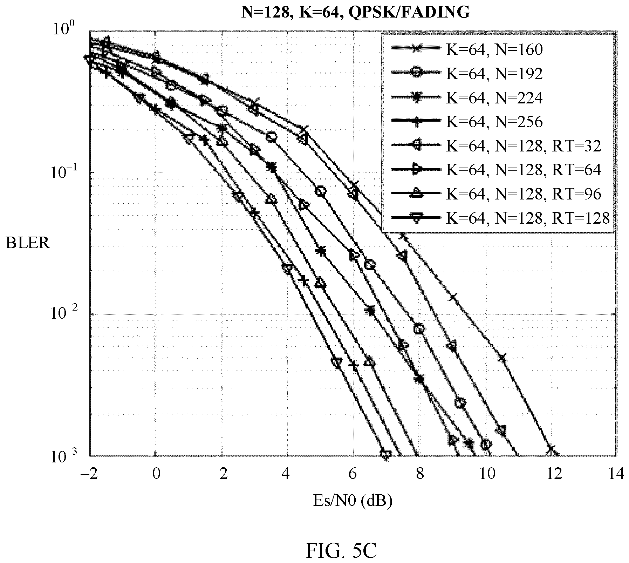

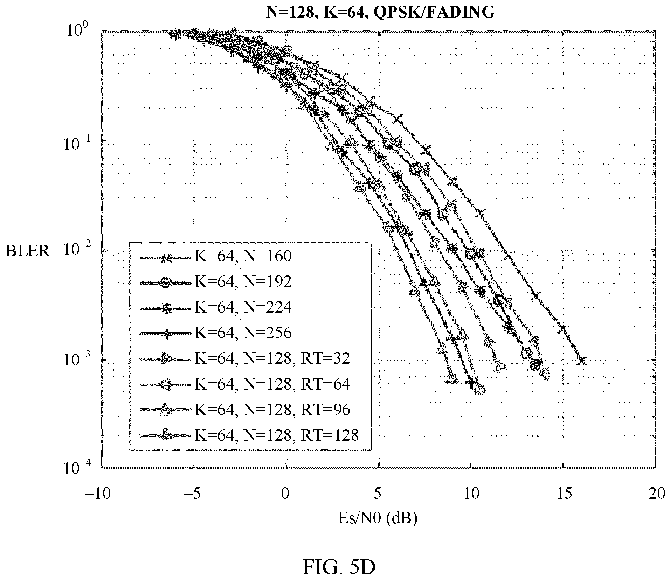

In the solution, after the decoding fails, the receive end may send the first indication information to indicate the information about the location of the at least one coded bit sent by the transmit end, so that the transmit end can send the at least one sent coded bit during retransmission, thereby improving decoding and error correction performance of the receive end. FIG. 5B is a diagram of performance evaluation of decoding an LDPC code by a receive end on a fading (Fading) channel according to a quadrature phase shift keying (Quadrature Phase Shift Keying, QPSK) modulation scheme in a manner in which the receive end feeds back first indication information based on an LLR. FIG. 5C and FIG. 5D are diagrams of performance evaluation of decoding an LDPC code by a receive end on a fading channel according to a QPSK modulation scheme in a manner in which the receive end feeds back first indication information based on a channel estimation value. In FIG. 5B, FIG. 5C, and FIG. 5D, a horizontal coordinate represents a signal-to-noise ratio (Es/N0), and a vertical coordinate represents a decoding error rate (Block Error Rate, BLER).

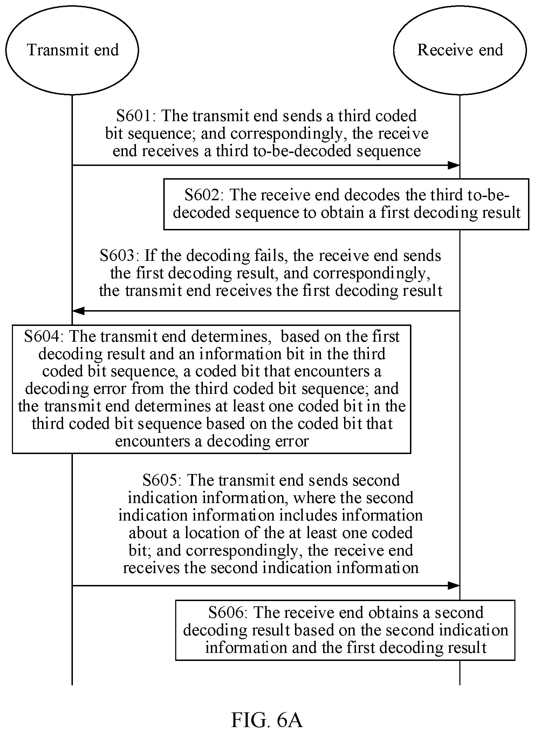

FIG. 6A is a schematic flowchart of another information transmission method according to an embodiment of this application. The method includes the following steps.

S601: A transmit end sends a third coded bit sequence; and correspondingly, a receive end receives a third to-be-decoded sequence, where the third to-be-decoded sequence is a sequence formed by the third coded bit sequence transmitted through a channel, where the third coded bit sequence is sent by the transmit end.

The transmit end encodes to-be-transmitted information bits to generate a to-be-transmitted coded bit sequence. An encoding scheme used by the transmit end includes but is not limited to an LDPC encoding scheme, a polar encoding scheme, and the like.

A process in which the transmit end sends a coded bit sequence for the first time based on the to-be-transmitted coded bit sequence is an initial transmission process, and a process of sending a coded bit sequence after the initial transmission process is a retransmission process. A quantity of retransmissions may be one or more. This is not limited in this application.

The third coded bit sequence may be a coded bit sequence sent in the initial transmission process, or may be a coded bit sequence sent in the retransmission process. This is not limited in this application.

For example, it is assumed that the transmit end performs a maximum of t retransmission, and the transmit end repeatedly sends the coded bit sequence for a maximum of t+1 plus the initial transmission. The third coded bit sequence may be a coded bit sequence sent by the transmit end for the $(k-1)^{th}$ time, and k is a positive integer greater than 1 and less than or equal to t+1.

Correspondingly, the receive end may repeatedly receive a to-be-decoded sequence. Specifically, each time the transmit end sends the coded bit sequence, the receive end correspondingly receives a to-be-decoded sequence. The third to-be-decoded sequence corresponds to the third coded bit sequence. To be specific, the third to-be-decoded sequence is a sequence formed by the third coded bit sequence transmitted through a channel, where the third coded bit sequence is sent by the transmit end based on the to-be-transmitted coded bit sequence.

It may be understood that, before sending the third coded bit sequence, the transmit end may further perform modulation or other processing on the third coded bit sequence. After being converted into a waveform signal, the third coded bit sequence is transmitted to the channel (or a carrier) for transmission. In a transmission process, the waveform signal may be deformed to some extent due to path loss, noise interference, or other impact. Therefore, a waveform signal received by the receive end may be different from the waveform signal sent by the transmit end. Correspondingly, after receiving the waveform signal, the receive end performs demodulation or other processing on the waveform signal to obtain the third to-be-decoded sequence corresponding to the third coded bit sequence. For ease of description, the foregoing process is described as follows in this specification: The transmit end sends the third to-be-decoded sequence, and the receive end receives the third to-be-decoded sequence.

S602: The receive end decodes the third to-be-decoded sequence to obtain a first decoding result.

Specifically, the receive end decodes the third to-be-decoded sequence according to a decoding scheme corresponding to an encoding scheme of the transmit end. For example, if the transmit end encodes a to-be-transmitted information bit sequence by using an LDPC matrix to generate the third coded bit sequence, the receive end performs iterative decoding on the third to-be-decoded sequence by using the LDPC matrix.

If the decoding succeeds, for example, $cH^T=0$ (c represents a decoded codeword, and H represents the LDPC matrix), decoding is stopped.

It should be understood that $cH^T=0$ is a necessary but insufficient condition for successful decoding, and $cH^T=0$ is merely an example. Actually, another determining condition further needs to be met for the successful decoding. This is not limited in this application.

Optionally, the receive end may further send an ACK, to indicate that the decoding succeeds.

If the decoding fails, for example, $cH^T\neq0$, the receive end performs S603. It should be understood that $cH^T\neq0$ is merely an example. Actually, the decoding may fail for another reason. This is not limited in this application.

S603: If the decoding fails, the receive end sends the first decoding result; and correspondingly, the transmit end receives the first decoding result.

Optionally, the receive end may compress the first decoding result and then send a compressed first decoding result to the transmit end, to reduce resource overheads. Further optionally, the receive end may send only an information bit in the first decoding result, to reduce the resource overheads. For example, the transmit end sends the information bit in the first decoding result to the transmit end according to a method of a joint source channel coding scheme (Joint Source Channel Coding Scheme, JSCC).

Optionally, the receive end may further send a NACK, to indicate that the decoding fails.

S604: The transmit end determines, based on the first decoding result and an information bit in the third coded bit sequence, a coded bit that encounters a decoding error from the third coded bit sequence; and the transmit end determines at least one coded bit in the third coded bit sequence based on the coded bit that encounters a decoding error.

It may be understood that a location of the information bit in the first decoding result is in one-to-one correspondence with a location of the information bit in the third coded bit sequence. If an information bit at a corresponding location is different, it is considered that a coded bit at the location encounters a decoding error.

The transmit end determines all coded bits that encounter a decoding error by comparing the information bit in the first decoding result with the information bit in the third coded bit sequence, and then determines the at least one coded bit in the third coded bit sequence based on the coded bit that encounters a decoding error (or determines a location of the at least one coded bit in the third coded bit sequence).

Because decoding is mainly used to restore an information bit, a coded bit that encounters a decoding error may also be referred to as an information bit that encounters a decoding error, an information bit that encounters a decoding error, or the like.

In a possible design, for example, when there is a large quantity of system resources, and a length of second indication information subsequently sent by the transmit end is large enough (for example, regardless of a quantity of coded bits that encounter a decoding error, the second indication information may indicate information about locations of all the coded bits that encounter a decoding error), all the coded bits that encounter a decoding error may be used as the at least one coded bit.

In another possible design, the transmit end determines the at least one coded bit based on a quantity of coded bits that encounter a decoding error. For example, when resources in a system are limited, and a length of second indication information is limited (for example, if there is a large quantity of coded bits, the second indication information cannot indicate information about locations of all the coded bits that encounter a decoding error), a threshold T may be set. When the quantity of coded bits that encounter a decoding error is less than T, the transmit end uses the coded bit that encounters a decoding error as the at least one coded bit. Alternatively, when the quantity of coded bits that encounter a decoding error is greater than T, the transmit end selects T coded bits from the coded bits that encounter a decoding error, and uses the T coded bits as the at least one coded bit. When the quantity of coded bits that encounter a decoding error is equal to T, the at least one coded bit may be determined in any one of the foregoing manners. This is not limited in this application. T is a preset threshold.

In other words, when there is a small quantity of information bits that encounter a decoding error, the transmit end may directly indicate locations of these information bits that encounter a decoding error, so that the receive end directly corrects the error. When there is a large quantity of information bits that encounter a decoding error, the transmit end indicates locations of the T coded bits that encounter a decoding error, so that the receive end corrects an error of prior information of the T information bits, and performs re-decoding by using corrected prior information.

Optionally, the transmit end may select, based on degrees, belonging degrees in an absorbing set, belonging degrees in a stopping set that correspond to the coded bits that encounter decoding errors, and other indicators, the T coded bits from the coded bits that encounter a decoding error.

For example, the coded bits that encounter a decoding error are sorted in ascending order of degrees (or in descending order of belonging degrees in an absorbing set, or in descending order of belonging degrees in a stopping set), and the first T coded bits are selected.

Optionally, T may be set to a maximum value that enables $N - 1 \geq \log_2 \sum_{i=1}^{T} \binom{k}{i}$ to be true, where N is an information bit length of the second indication information (which may be specifically based on an available resource of the system, protocol-specified, or agreed on by the transmit end and the receive end), and k is a quantity of information bits (or information bits) in a first coded bit sequence.

In a possible design, the second indication information further includes an indicator bit. When the quantity of coded bits that encounter a decoding error is less than T, a value of the indicator bit is a first value. When the quantity of coded bits that encounter a decoding error is greater than or equal to T, a value of the indicator bit is a second value. The first value is different from the second value. For example, the first value is 0, and the second value is 1; or the first value is 1, and the second value is 0.

For example, when the quantity of coded bits that encounter a decoding error is greater than or equal to T, the transmit end selects the T coded bits from the coded bits that encounter a decoding error, performs source encoding on information about locations of the selected T coded bits, to map the information about the locations of the selected T coded bits to an information bit sequence of a maximum length of N-1, and add an indicator bit at the end of the information bit sequence, to obtain the second indication information.

In this way, after receiving the second indication information, the receive end may learn of information about a specific location carried in the second indication information, and use different processing policies based on different cases. For details, refer to the descriptions in S605.

S605: The transmit end sends the second indication information, where the second indication information includes information about a location of the at least one coded bit; and correspondingly, the receive end receives the second indication information.

S606: The receive end obtains a second decoding result based on the second indication information and the first decoding result.

In a possible design, for example, when there is a large quantity of system resources (in other words, regardless of the quantity of coded bits that encounter a decoding error, the second indication information may indicate the information about the locations of all the coded bits that encounter a decoding error), and the second indication information carries, for example, no indicator bit, the receive end may directly determine, based on the second indication information, a coded bit that encounters a decoding error in the first decoding result, and correct the coded bit that encounters an error (invert the coded bit that encounters a decoding error), to obtain the second decoding result.

In another possible design, for example, when system resources are limited, and the second indication information further carries, for example, the indicator bit, the receive end may obtain the second decoding result according to different methods based on different values of the indicator bit:

when the indicator bit is the first value, the receive end determines, based on the information about the location of the at least one coded bit in the third coded bit sequence, a coded bit that encounters a decoding error in the first decoding result, and corrects the coded bit that encounters an error (invert the coded bit that encounters a decoding error), to obtain the second decoding result; or

when the indicator bit is the second value, the receive end corrects, based on the information about the location of the at least one coded bit in the third coded bit sequence, prior information corresponding to the first decoding result (namely, prior information obtained in a process in which the receive end decodes the third to-be-decoded sequence), and re-decodes the third coded bit sequence based on corrected prior information, to obtain the second decoding result.

For example, the receive end determines, based on the information about the locations of the T coded bits indicated by the second indication information, LLRs corresponding to the T coded bits from an LLR sequence (an LLR sequence obtained in a process in which the receive end decodes the third to-be-decoded sequence) corresponding to the first decoding result, for example, LLR(x), where x is an index value of a location of each of the T coded bits; makes LLR(x) = -1 * sign($v_{all}(x)$) * Inf, where Inf is a symbol indicating a maximum amplitude, $v_{all}(x)$ is a soft value corresponding to the first decoding result, $v_{all}(x) = LLR + \sum_{c \in N(v)} m_{c \to v}$, c represents a check node (or a check equation), v represents a variable node, $m_{c \to v}$ represents information sent by the check node to the variable node, and N(v) represents a set of all check equations associated with the variable node v; and performs re-decoding based on a new LLR sequence.

Optionally, if the re-decoding fails in S606, the receive end may further feed back the second decoding result to the transmit end, so that the transmit end re-determines a location at which the decoding error occurs, and sends new indication information based on the re-determined location at which the decoding error occurs, and the receive end may re-obtain a new decoding result, until the receive end succeeds in decoding.

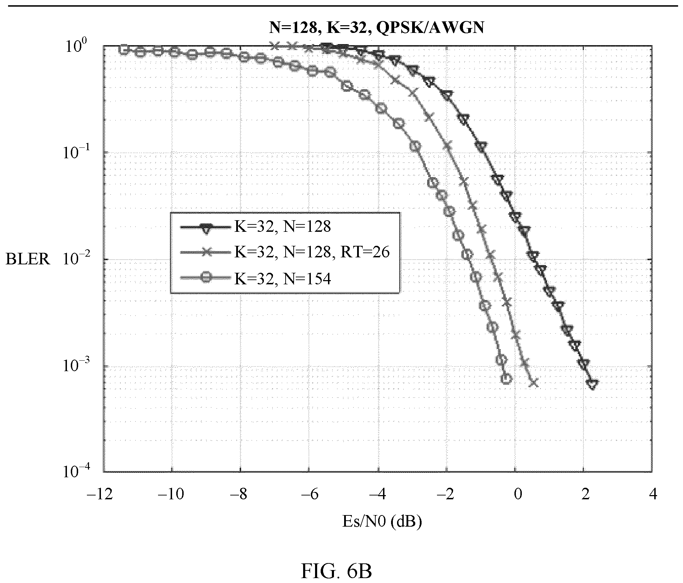

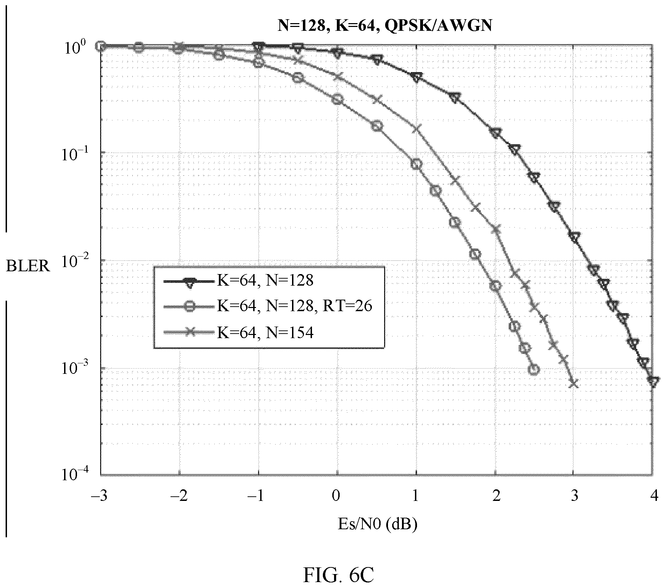

In the foregoing solution, the transmit end may indicate, in a targeted manner, the location at which the decoding error occurs, so that the receive end can perform error correction on the decoding result. Compared with a scheme of equivalently constructing a long code (as shown in FIG. 4), the foregoing solution can effectively improve decoding and error correction performance of the receive end. For example, FIG. 6B and FIG. 6C are diagrams of performance evaluation of decoding an LDPC code on an additive white Gaussian noise (Additive White Gaussian Noise, AWGN) channel according to a QPSK modulation scheme by using the foregoing solution. In FIG. 6B and FIG. 6C, a horizontal coordinate represents Es/N0, and a vertical coordinate represents a BLER.

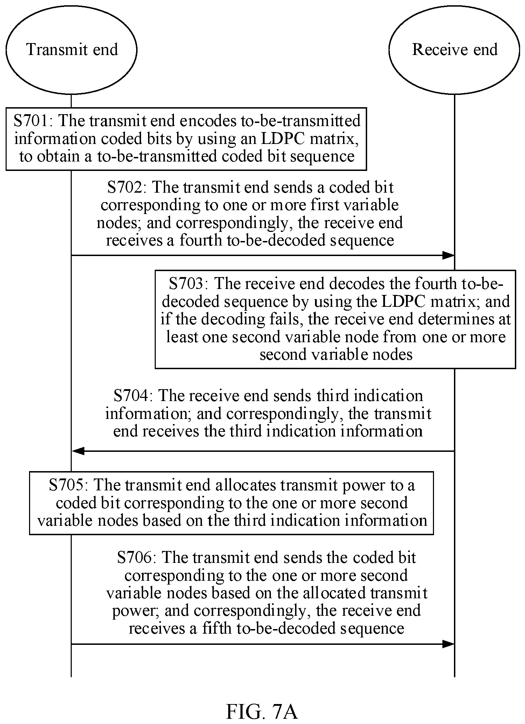

FIG. 7A is a schematic flowchart of another information transmission method according to an embodiment of this application. The method includes the following steps.

S701: A transmit end encodes to-be-transmitted information coded bits by using an LDPC matrix, to obtain a to-be-transmitted coded bit sequence.

The to-be-transmitted coded bit sequence includes a coded bit corresponding to one or more first variable nodes and a coded bit corresponding to one or more second variable nodes. The first variable node is a variable node corresponding to a coded bit first sent by the transmit end, and the second variable node is a variable node corresponding to a coded bit sent by the transmit end after the transmit end sends the coded bit corresponding to the first variable node and receives a NACK fed back by a receive end.

A column weight of the second variable node is 1. In other words, in the LDPC matrix, there is only one non-zero element in a column in which the second variable node is located, that is, the second variable node is associated with only one check equation.

An LDPC matrix of a raptor-like structure is used as an example. In this case, the second variable node may be a raptor-like node. For example, the first variable node may be a variable node (corresponding to a coded bit during initial transmission) inside the dashed box in FIG. 4, and the second variable node may be a variable node (corresponding to a coded bit during retransmission) outside the dashed box. It may be understood that the one or more second variable nodes may be all variable nodes outside the dashed box, or may be a part of variable nodes outside the dashed box. This is not limited in this application.

S702: The transmit end sends the coded bit corresponding to the one or more first variable nodes; and correspondingly, the receive end receives a fourth to-be-decoded sequence.

It may be understood that, before or when sending the coded bit corresponding to the one or more first variable nodes, the transmit end has not sent the coded bit corresponding to the one or more second variable nodes. In other words, the coded bit sent by the transmit end in step S702 does not include the coded bit corresponding to the one or more second variable nodes.

The fourth to-be-decoded sequence is a sequence formed by the coded bit transmitted through a channel, where the coded bit is corresponding to the one or more first variable nodes. For a channel transmission process, refer to the foregoing channel transmission process of the first coded bit sequence, the second coded bit sequence, the third coded bit sequence, or the like. Details are not described herein again.

S703: The receive end decodes the fourth to-be-decoded sequence by using the LDPC matrix; and if the decoding fails, the receive end determines at least one second variable node from the one or more second variable nodes.

That the receive end determines the at least one second variable node from the one or more second variable nodes may also be described as that the receive end determines a location of the at least one second variable node from a location of the one or more second variable nodes, and the location is a location of the at least one second variable node in all variable nodes in the LDPC matrix (that is, corresponding to the to-be-transmitted coded bit sequence). For example, if each variable node in the LDPC matrix corresponds to one location number, the receive end may determine a location number of the at least one second variable node from location numbers of all the variable nodes in the LDPC matrix.

For a process in which the receive end decodes the fourth to-be-decoded sequence by using the LDPC matrix, refer to the foregoing decoding process of the first to-be-decoded sequence, the second to-be-decoded sequence, the third to-be-decoded sequence, or the like. Details are not described herein again.

If the decoding succeeds, decoding is stopped. Optionally, the receive end sends an ACK.

If the decoding fails, the receive end determines the at least one second variable node from the one or more second variable nodes.

The at least one second variable node may be a second variable node whose transmit power needs to be increased, may be a second variable node whose transmit power needs to be decreased, or may include a second variable node whose transmit power needs to be increased and a second variable node whose transmit power needs to be decreased. This is not limited in this application.

In this embodiment of this application, reliability of the second variable node may be evaluated based on prior information and/or posterior information of a first variable node associated with each second variable node, and a first variable node associated with a second variable node is a first variable node in a check equation corresponding to the second variable node.

Specifically, transmit power of a second variable node with high reliability may be decreased, and transmit power of a second variable node with low reliability may be increased.

In a possible design, prior information or posterior information corresponding to a first variable node associated with the second variable node whose transmit power needs to be increased is within a first threshold range, and prior information or posterior information corresponding to a first variable node associated with the second variable node whose transmit power needs to be decreased is within a second threshold range, where the first threshold range is different from the second threshold range. For example, the first threshold range is a range less than or equal to a threshold, and the second threshold range is a range greater than the threshold.

In a possible design, the prior information includes an LLR or a channel estimation value generated in the decoding process, and/or the posterior information includes a soft value obtained after the decoding ends.

For example, an LLR and a soft value are used, and a second variable node whose transmit power needs to be decreased is selected.

It is assumed that the transmit end performs a maximum of t retransmissions after the initial transmission, and performs sending for a maximum of t+1 times plus the initial transmission; and a total sending code length is N. It is assumed that a code length after first k - 1 times of sending is $N_{k-1}$, where k is a positive integer greater than 1 and less than or equal to t+1, and a log-likelihood ratio is $LLR_{k-1}$. In a $k^{th}$ time of sending, the receive end selects, based on a currently received coded bit (namely, the fourth to-be-decoded sequence, corresponding to the one or more first variable nodes), raptor-like nodes $V'_k = \{v_1, ..., v_{N'_k}\}$ (namely, the one or more second variable nodes) corresponding to $N'_k$ coded bits to be sent by the transmit end next time, and for such a raptor-like node $v \in V'_k$, only one check node $c = N(v)$ is associated, where c represents the check node, and $N(v)$ represents a check equation associated with the variable node v (or a check equation corresponding to the check node c); calculates reliability indicators $f(c) = \sum_{v' \in N(c)} |LLR(v')|$ and $g(c) = \sum_{v' \in N(c)} (|LLR(v') + \sum_{c' \in N(v')} m_{c' \to v'}|)$ corresponding to each selected raptor-like node, where $N(c)$ represents a set of variable nodes (namely, first variable nodes) whose corresponding coded bits have been sent in the check equation $N(v)$ corresponding to the check node c, $v' \in N(c)$ represents that v' is set to each value in $N(c)$, $N(v')$ represents a set of check nodes associated with the variable node v', $c' \in N(v')$ represents that c' is set to each value in $N(v')$, and $m_{c' \to v'}$ represents information sent by the check node c' to the variable node v'; and selects $V_k = \{v \in V'_k \mid f(c) > f_0, g(c) > g_0, c = N(v)\}$ based on preset thresholds $f_0$ and $g_0$ about functions f and g, where selected $|V_k|$ raptor-like nodes ($|V_k|$ represents a size of the set $V_k$, namely, a quantity of elements in the set $V_k$) are variable nodes whose transmit power needs to be decreased by the transmit end in the $k^{th}$ time of sending.

It may be understood that the reliability indicator may have another variation. This is not limited in this application. For example, the foregoing summation formula may be changed into minimum value function formulas: $f(c) = \min_{v' \in N(c)} |LLR(v')|$ and $g(c) = \min_{v' \in N(c)} (|LLR(v') + \sum_{c' \in N(v')} m_{c' \to v'}|)$.

S704: The receive end sends third indication information, where the third indication information indicates the at least one second variable node; and correspondingly, the transmit end receives the third indication information.

Based on the related descriptions in S703, the third indication information herein indicates the at least one second variable node, which may also be described as that the third indication information indicates the location of the at least one second variable node, and the location is the location of the at least one second variable node in all the variable nodes in the LDPC matrix (that is, corresponding to the to-be-transmitted coded bit sequence).

If the at least one second variable node determined by the receive end from the one or more second variable nodes is the second variable node whose transmit power needs to be increased (namely, the second variable node with low reliability), the third indication information includes first information, where the first information indicates the second variable node whose transmit power needs to be increased in the one or more second variable nodes (or the first information indicates a location of the second variable node whose transmit power needs to be increased in the one or more second variable nodes).

If the at least one second variable node determined by the receive end from the one or more second variable nodes is the second variable node whose transmit power needs to be decreased (namely, the second variable node with high reliability), the third indication information includes second information, where the second information indicates the second variable node whose transmit power needs to be decreased in the one or more second variable nodes (or the second information indicates a location of the second variable node whose transmit power needs to be decreased in the one or more second variable nodes).

If the at least one second variable node determined by the receive end from the one or more second variable nodes includes both the second variable node whose transmit power needs to be increased (namely, the second variable node with low reliability) and the second variable node whose transmit power needs to be decreased (namely, the second variable node with high reliability), the third indication information may include first information and second information, where the first information indicates the second variable node whose transmit power needs to be increased in the one or more second variable nodes (or the first information indicates a location of the second variable node whose transmit power needs to be increased in the one or more second variable nodes), and the second information indicates the second variable node whose transmit power needs to be decreased in the one or more second variable nodes (or the second information indicates a location of the second variable node whose transmit power needs to be decreased in the one or more second variable nodes).

The example in S703 is still used. If the transmit end selects $V_k = \{v \in V'_k \mid f(c) > f_0, g(c) > g_0, c = N(v)\}$, the third indication information includes information about locations of selected $|V_k|$ raptor-like nodes, for example, index values of the locations of the $|V_k|$ raptor-like nodes.

S705: The transmit end allocates transmit power to the coded bit corresponding to the one or more second variable nodes based on the third indication information.

It may be understood that each variable node in the LDPC matrix is pre-allocated with power, and total power corresponding to all the variable nodes is P. After receiving the third indication information, on the basis of original power of the one or more second variable nodes, the transmit end performs power adjustment on the one or more second variable nodes based on the third indication information, to allocate the transmit power to the coded bit corresponding to the one or more second variable nodes.

Specifically, if the third indication information includes only the first information, and the first information indicates the second variable node whose transmit power needs to be increased in the one or more second variable nodes, the transmit end may increase the power of the second variable node indicated by the third indication information, and decrease power of another second variable node, to ensure that the total power P remains unchanged.

If the third indication information includes only the second information, and the second information indicates the second variable node whose transmit power needs to be decreased in the one or more second variable nodes, the transmit end may decrease the power of the second variable node indicated by the third indication information, and increase power of another second variable node, to ensure that the total power P remains unchanged.

If the third indication information includes both the first information and the second information, the transmit end increases the power of the corresponding second variable node based on the first information and decreases the power of the corresponding second variable node based on the second information, to ensure that the total power P remains unchanged.

The examples in S703 and S704 are still used. The third indication information includes the index values of the locations of the $|V_k|$ raptor-like nodes, and the $|V_k|$ raptor-like nodes are raptor-like nodes whose transmit power needs to be decreased (namely, the second variable node with high reliability). In this case, the transmit end decreases the transmit power of the $|V_k|$ raptor-like nodes, and increases transmit power of another raptor-like node, and $|V_k|P_l + (N'_k - |V_k|)P_h = N'_k * P_0 = P$ is satisfied, where $P_h$ indicates increased transmit power, $P_h$ indicates decreased transmit power, or $P_h$ indicates initial transmit power.

S706: The transmit end sends the coded bit corresponding to the one or more second variable nodes based on the allocated transmit power; and correspondingly, the receive end receives a fifth to-be-decoded sequence.

The example in S705 is still used. A symbol received by the receive end is $y = \begin{cases} \sqrt{P_h}x + n, & v \notin V_k \\ \sqrt{P_l}x + n, & v \in V_k \end{cases}$, where $x$ is a sent symbol, and $n$ is channel noise. The receive end generates a new log-likelihood ratio based on the received symbol for decoding. The receive end determines, depending on whether the decoding succeeds and whether a maximum quantity t of retransmissions is reached, whether the transmit end needs to perform sending for a $(k + 1)^{th}$ time.

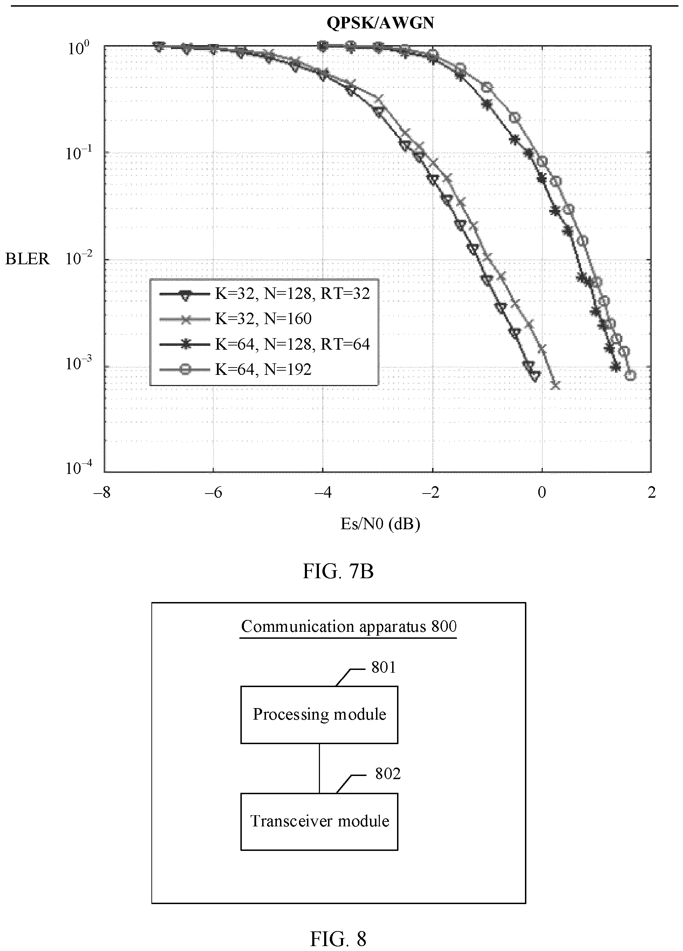

In the foregoing solution, based on an association feature of a variable node of an LDPC code with reference to decoding reliability analysis corresponding to an initially transmitted coded bit, transmit power of a to-be-retransmitted coded bit is adjusted, for example, transmit power of a variable node corresponding to high reliability is decreased, and transmit power of a variable node corresponding to low reliability is increased, so that decoding and error correction performance of the receive end can be effectively improved. For example, FIG. 7B is a performance evaluation diagram of decoding an LDPC code on an AWGN channel according to a QPSK modulation scheme by using the foregoing solution. In FIG. 7B, a horizontal coordinate represents Es/N0, and a vertical coordinate represents a BLER.

The methods provided in embodiments of this application are described above with reference to the accompanying drawings. Apparatuses provided in embodiments of this application are described below with reference to the accompanying drawings.

An embodiment of this application provides a communication apparatus 800. The apparatus may be, for example, the transmit end or the receive end, or a chip disposed inside the transmit end or the receive end. The apparatus has functions of implementing the transmit end or the receive end in the embodiment shown in FIG. 5A, FIG. 6A, or FIG. 7A. For example, the apparatus includes a module, a unit, or a means (means) corresponding to the step performed by the transmit end or the receive end in the embodiment shown in FIG. 5A, FIG. 6A, or FIG. 7A. The function, the unit, or the means may be implemented by software, or may be implemented by hardware by executing corresponding software.

For example, as shown in FIG. 8, the communication apparatus 800 includes a processing module 801 and a transceiver module 802.

In the case that the communication apparatus 800 is configured to implement the functions of the transmit end in the embodiment shown in FIG. 5A,

the processing module 801 is configured to generate a to-be-transmitted coded bit sequence; and the transceiver module 802 is configured to: send a first coded bit sequence based on the to-be-transmitted coded bit sequence, where the to-be-transmitted coded bit sequence includes the first coded bit sequence; receive first indication information, where the first indication information includes information about a location, in the to-be-transmitted coded bit sequence, of at least one sent coded bit in the to-be-transmitted coded bit sequence; and send a second coded bit sequence based on the first indication information, where the to-be-transmitted coded bit sequence includes the second coded bit sequence, and the second coded bit sequence includes the at least one sent coded bit in the to-be-transmitted coded bit sequence and/or at least one unsent coded bit in the to-be-transmitted coded bit sequence.

In the case that the communication apparatus 800 is configured to implement the functions of the receive end in the embodiment shown in FIG. 5A,

the transceiver module 802 is configured to receive a first to-be-decoded sequence, where the first to-be-decoded sequence is a sequence formed by a first coded bit sequence transmitted through a channel, where the first coded bit sequence is sent by a transmit end based on a to-be-transmitted coded bit sequence; the processing module 801 is configured to decode the first to-be-decoded sequence; if the decoding fails, the processing module 801 is further configured to determine first indication information, where the first indication information includes information about a location, in the to-be-transmitted coded bit sequence, of at least one sent coded bit in the to-be-transmitted coded bit sequence; and the transceiver module 802 is further configured to: send the first indication information, and receive a second to-be-decoded sequence, where the second to-be-decoded sequence is a sequence formed by a second coded bit sequence transmitted through a channel, where the second coded bit sequence is sent by the transmit end based on the first indication information.

In the case that the communication apparatus 800 is configured to implement the functions of the transmit end in the embodiment shown in FIG. 6A,

the transceiver module 802 is configured to send a third coded bit sequence, and receive a first decoding result; the processing module 801 is configured to determine, based on the first decoding result and an information bit in the third coded bit sequence, a coded bit that encounters a decoding error from the third coded bit sequence, and determine at least one coded bit in the third coded bit sequence based on the coded bit that encounters a decoding error; and the transceiver module 802 is further configured to send second indication information, where the second indication information includes information about a location of the at least one coded bit.

In the case that the communication apparatus 800 is configured to implement the functions of the receive end in the embodiment shown in FIG. 6A,

the transceiver module 802 is configured to receive a third to-be-decoded sequence, where the third to-be-decoded sequence is a sequence formed by a third coded bit sequence transmitted through a channel, where the third coded bit sequence is sent by a transmit end; the processing module 801 is configured to decode the third to-be-decoded sequence to obtain a first decoding result; if the decoding fails, the transceiver module 802 is further configured to: send the first decoding result, and receive second indication information, where the second indication information includes information about a location of at least one coded bit in the third coded bit sequence; and the processing module 801 is further configured to obtain a second decoding result based on the second indication information and the first decoding result.

In the case that the communication apparatus 800 is configured to implement the functions of the transmit end in the embodiment shown in FIG. 7A,

the processing module 801 is configured to encode to-be-transmitted information coded bits by using a low-density parity-check LDPC matrix, to obtain a to-be-transmitted coded bit sequence, where the to-be-transmitted coded bit sequence includes a coded bit corresponding to one or more first variable nodes and a coded bit corresponding to one or more second variable nodes, and a column weight corresponding to the second variable node is 1; the transceiver module 802 is configured to: send the coded bit corresponding to the one or more first variable nodes, and receive third indication information, where the third indication information indicates at least one second variable node in the one or more second variable nodes; the processing module 801 is further configured to allocate transmit power to the coded bit corresponding to the one or more second variable nodes based on the third indication information; and the transceiver module 802 is further configured to send the coded bit corresponding to the one or more second variable nodes based on the allocated transmit power.

In the case that the communication apparatus 800 is configured to implement the functions of the receive end in the embodiment shown in FIG. 7A,

the transceiver module 802 is configured to receive a fourth to-be-decoded sequence, where the fourth to-be-decoded sequence is a sequence formed by a coded bit transmitted through a channel, where the coded bit is corresponding to one or more first variable nodes, the coded bit corresponding to the one or more first variable nodes is included in a coded bit sequence generated based on an LDPC matrix, the coded bit sequence generated based on the LDPC matrix further includes a coded bit corresponding to one or more second variable nodes, and a column weight corresponding to the second variable node is 1; the processing module 801 is configured to decode the fourth to-be-decoded sequence by using the LDPC matrix; if the decoding fails, the processing module 801 is further configured to determine at least one second variable node from the one or more second variable nodes; and the transceiver module 802 is further configured to send third indication information, where the third indication information indicates the at least one second variable node.

It should be understood that all related content of the steps in the foregoing method embodiments may be cited in function descriptions of corresponding functional modules. Details are not described herein again.

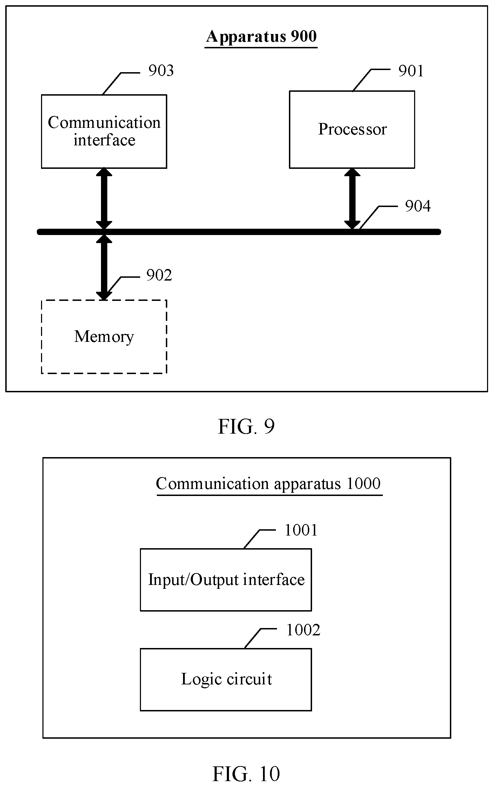

Based on the same technical concept, as shown in FIG. 9, an embodiment of this application further provides a communication apparatus 900, including:

at least one processor 901 and a communication interface 903 communicatively connected to the at least one processor 901, where the at least one processor 901 executes instructions stored in a memory 902, to enable the apparatus 900 to perform, through the communication interface 903, the method performed by the transmit end or the receive end in the embodiment shown in FIG. 5A, FIG. 6A, or FIG. 7A.

Optionally, the memory 902 is located outside the apparatus 900.

Optionally, the apparatus 900 includes the memory 902, the memory 902 is connected to the at least one processor 901, and the memory 902 stores the instructions executable by the at least one processor 901. In FIG. 9, a dashed line is used for indicating that the memory 902 is optional for the apparatus 900.

The processor 901 and the memory 902 may be coupled by using an interface circuit, or may be integrated together. This is not limited herein.

A specific connection medium between the processor 901, the memory 902, and the communication interface 903 is not limited in embodiments of this application. In embodiments of this application, in FIG. 9, the processor 901, the memory 902, and the communication interface 903 are connected through a bus 904. The bus is represented by a thick line in FIG. 9. A manner of connection between other components is merely an example for description, and is not limited thereto. The bus may be classified into an address bus, a data bus, a control bus, and the like. For ease of representation, only one thick line is used for representing the bus in FIG. 9, but this does not mean that there is only one bus or only one type of bus.

It should be understood that the processor mentioned in embodiments of this application may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is the general-purpose processor, the DSP, the ASIC, the FPGA or the another programmable logic device, the discrete gate or the transistor logic device, or the discrete hardware component, the memory (storage module) may be integrated into the processor.

It should be noted that the memory described in this specification aims to include but is not limited to these memories and any memory of another proper type.

Based on the same technical concept, as shown in FIG. 10, an embodiment of this application further provides a communication apparatus 1000, including an input/output interface 1001 and a logic circuit 1002. The input/output interface 1001 is configured to output a coded bit sequence or input a to-be-decoded sequence. The logic circuit is configured to perform the method performed by the transmit end or the receive end in the embodiment shown in FIG. 5A, FIG. 6A, or FIG. 7A.

**EP 4 521 664 A1**

Optionally, the logic circuit 1002 may be a chip, an encoder, an encoding circuit, or another integrated circuit that can implement the method in this application.

Based on the same technical concept, an embodiment of this application further provides a computer-readable storage medium, including a program or instructions. When the program or the instructions are run on a computer, the method performed by the transmit end or the receive end in the embodiment shown in FIG. 5A, FIG. 6A, or FIG. 7A is performed.

Based on the same technical concept, an embodiment of this application further provides a computer program product, including instructions. When the instructions are run on a computer, the method performed by the transmit end or the receive end in the embodiment shown in FIG. 5A, FIG. 6A, or FIG. 7A is performed.

Based on the same technical concept, an embodiment of this application further provides a communication system, including the transmit end and the receive end in the foregoing embodiments.

Embodiments of this application are described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Certainly, a person skilled in the art may make various modifications and variations to embodiments of this application without departing from the scope of this application. In this case, this application is intended to cover these modifications and variations of embodiments of this application provided that they fall within the scope of protection defined by the following claims and their equivalent technologies.

**Claims**

1. An information transmission method, comprising:

   sending, by a first communication apparatus, a first coded bit sequence based on a to-be-transmitted coded bit sequence, wherein the to-be-transmitted coded bit sequence comprises the first coded bit sequence;
   receiving, by the first communication apparatus, first indication information, wherein the first indication information comprises information about a location, in the to-be-transmitted coded bit sequence, of at least one sent coded bit in the to-be-transmitted coded bit sequence; and
   sending, by the first communication apparatus, a second coded bit sequence based on the first indication information, wherein the to-be-transmitted coded bit sequence comprises the second coded bit sequence, and the second coded bit sequence comprises the at least one sent coded bit in the to-be-transmitted coded bit sequence and/or at least one unsent coded bit in the to-be-transmitted coded bit sequence.

2. The method according to claim 1, further comprising:

   retransmitting, by the first communication apparatus, a coded bit sequence at least once based on the to-be-transmitted coded bit sequence, wherein
the first coded bit sequence is an initially transmitted coded bit sequence, and the second coded bit sequence is a coded bit sequence retransmitted for the first time; or the first coded bit sequence is a coded bit sequence retransmitted for the $(q-1)^{th}$ time, and the second coded bit sequence is a coded bit sequence retransmitted for the $q^{th}$ time, wherein q is a positive integer greater than 1.

3. The method according to claim 1 or 2, wherein the information about the location is an index value of the location of the at least one sent coded bit in the to-be-transmitted coded bit sequence.

4. The method according to claim 1 or 2, wherein the information about the location is indication information of at least one resource sub-segment corresponding to the at least one sent coded bit, and the at least one resource sub-segment is located in a resource segment corresponding to the to-be-transmitted coded bit sequence.

5. The method according to any one of claims 1 to 4, wherein a proportion of sent coded bits in the second coded bit sequence does not exceed a preset value $\delta$.

6. The method according to any one of claims 1 to 5, wherein a quantity of at least one sent coded bit in the second coded bit sequence meets the following condition:

$$
n''_k = \begin{cases} 0 & , & 0 > \frac{\delta'(N_{k-1}+n_k)-N''_{k-1}}{1+\delta'} \\ \left\lfloor \frac{\delta'(N_{k-1}+n_k)-N''_{k-1}}{1+\delta'} \right\rfloor, & 0 \le \frac{\delta'(N_{k-1}+n_k)-N''_{k-1}}{1+\delta'} \le n_k \\ n_k & , & n_k < \frac{\delta'(N_{k-1}+n_k)-N''_{k-1}}{1+\delta'} \end{cases} ,
$$

wherein
$n''_k$ is the quantity of the at least one sent coded bit in the to-be-transmitted coded bit sequence comprised in the second coded bit sequence, $N_{k-1}$ represents a quantity of coded bits sent by the first communication apparatus before the second coded bit sequence, $N''_{k-1}$ represents a quantity of coded bits repeatedly sent by the first communication apparatus before the second coded bit sequence, $n_k$ is a quantity of coded bits comprised in the second coded bit sequence, and $\delta'$ is a threshold corresponding to a proportion of repeatedly sent coded bits in all coded bit sequences sent by the first communication apparatus based on the to-be-transmitted coded bit sequence, wherein the proportion of repeatedly sent coded bits in all the coded bit sequences sent by the first communication apparatus based on the to-be-transmitted coded bit sequence does not exceed $\delta'$.

7. The method according to claim 6, wherein $\delta'$ is greater than or equal to a preset threshold.

8. An information transmission method, comprising:

receiving, by a second communication apparatus, a first to-be-decoded sequence, wherein the first to-be-decoded sequence is a sequence formed by a first coded bit sequence transmitted through a channel, wherein the first coded bit sequence is sent by a first communication apparatus based on a to-be-transmitted coded bit sequence;
decoding, by the second communication apparatus, the first to-be-decoded sequence;
determining, by the second communication apparatus, first indication information if the decoding fails, wherein the first indication information comprises information about a location, in the to-be-transmitted coded bit sequence, of at least one sent coded bit in the to-be-transmitted coded bit sequence;
sending, by the second communication apparatus, the first indication information; and
receiving, by the second communication apparatus, a second to-be-decoded sequence, wherein the second to-be-decoded sequence is a sequence formed by a second coded bit sequence transmitted through a channel, wherein the second coded bit sequence is sent by the first communication apparatus based on the first indication information.

9. The method according to claim 8, wherein the first coded bit sequence is a coded bit sequence initially transmitted by the first communication apparatus, and the second coded bit sequence is a coded bit sequence retransmitted by the first communication apparatus for the first time; or the first coded bit sequence is a coded bit sequence retransmitted by the first communication apparatus for the $(q-1)^{th}$ time, and the second coded bit sequence is a coded bit sequence retransmitted by the first communication apparatus for the $q^{th}$ time, wherein q is a positive integer greater than 1.

10. The method according to claim 8 or 9, wherein the information about the location is an index value of the location of the at least one sent coded bit in the to-be-transmitted coded bit sequence.

11. The method according to claim 10, wherein the method further comprises:

obtaining, by the second communication apparatus, a log-likelihood ratio LLR sequence corresponding to the first to-be-decoded sequence, wherein an LLR in the LLR sequence corresponds to a coded bit in the to-be-transmitted coded bit sequence; and
the determining, by the second communication apparatus, first indication information comprises:

determining, by the second communication apparatus, the first $n''_k$ LLRs with smaller amplitudes from the LLR sequence, wherein $n''_k$ is a positive integer, and $n''_k$ coded bits corresponding to the $n''_k$ LLRs are the at least one sent coded bit in the to-be-transmitted coded bit sequence; and
determining, by the second communication apparatus, the first indication information based on locations of the $n''_k$ coded bits corresponding to the $n''_k$ LLRs in the to-be-transmitted coded bit sequence.

12. The method according to claim 8 or 9, wherein the information about the location is information about at least one resource sub-segment corresponding to the at least one sent coded bit, and the at least one resource sub-segment is located in a resource segment corresponding to the to-be-transmitted coded bit sequence.

13. The method according to claim 12, wherein the method further comprises:

obtaining, by the second communication apparatus, a channel estimation result corresponding to the first to-be-decoded sequence, wherein a channel estimation value in the channel estimation result corresponds to a coded bit in the to-be-transmitted coded bit sequence; and
the determining, by the second communication apparatus, first indication information comprises:

determining, by the second communication apparatus based on the channel estimation result, a channel estimation average value corresponding to each resource sub-segment in the resource segment corresponding to the to-be-transmitted coded bit sequence;
determining, by the second communication apparatus, M resource sub-segments with smaller channel estimation average values from the resource segment corresponding to the to-be-transmitted coded bit sequence, wherein M is a positive integer; and
determining, by the second communication apparatus, the first indication information based on the M resource sub-segments.

14. The method according to any one of claims 8 to 13, wherein a proportion of sent coded bits in the second coded bit sequence does not exceed a preset value $\delta$.

15. The method according to any one of claims 8 to 14, wherein a quantity of at least one sent coded bit in the second coded bit sequence meets the following condition:

$$
n''_k = \begin{cases} 0 & , & 0 > \frac{\delta'(N_{k-1}+n_k)-N''_{k-1}}{1+\delta'} \\ \left\lfloor \frac{\delta'(N_{k-1}+n_k)-N''_{k-1}}{1+\delta'} \right\rfloor, & 0 \le \frac{\delta'(N_{k-1}+n_k)-N''_{k-1}}{1+\delta'} \le n_k \\ n_k & , & n_k < \frac{\delta'(N_{k-1}+n_k)-N''_{k-1}}{1+\delta'} \end{cases}
$$

wherein
$n''_k$ is the quantity of at least one sent coded bit in the to-be-transmitted coded bit sequence comprised in the second coded bit sequence, $N_{k-1}$ represents a quantity of coded bits sent by the first communication apparatus before the second coded bit sequence, $N''_{k-1}$ represents a quantity of coded bits repeatedly sent by the first communication apparatus before the second coded bit sequence, $n_k$ is a quantity of coded bits comprised in the second coded bit

sequence, and $\delta$' is a threshold corresponding to a proportion of repeatedly sent coded bits in all coded bit sequences sent by the first communication apparatus based on the to-be-transmitted coded bit sequence, wherein the proportion of repeatedly sent coded bits in all the coded bit sequences sent by the first communication apparatus based on the to-be-transmitted coded bit sequence does not exceed $\delta$'.

16. The method according to claim 15, wherein $\delta$' is greater than or equal to a preset threshold.

17. An information transmission method, comprising:

sending, by a first communication apparatus, a third coded bit sequence;
receiving, by the first communication apparatus, a first decoding result;
determining, by the first communication apparatus based on the first decoding result and an information bit in the third coded bit sequence, a coded bit that encounters a decoding error from the third coded bit sequence;
determining, by the first communication apparatus, at least one coded bit in the third coded bit sequence based on the coded bit that encounters a decoding error; and
sending, by the first communication apparatus, second indication information, wherein the second indication information comprises information about a location of the at least one coded bit.

18. The method according to claim 17, wherein the determining, by the first communication apparatus, at least one coded bit in the third coded bit sequence based on the coded bit that encounters a decoding error comprises:

when a quantity of coded bits that encounter a decoding error is less than T, using, by the first communication apparatus, the coded bit that encounters a decoding error as the at least one coded bit; or
when a quantity of coded bits that encounter a decoding error is greater than or equal to T, selecting, by the first communication apparatus, T coded bits from the coded bits that encounter a decoding error, and using the T coded bits as the at least one coded bit, wherein
T is a preset threshold.

19. The method according to claim 18, wherein the second indication information further comprises an indicator bit; and

when the quantity of coded bits that encounter a decoding error is less than T, a value of the indicator bit is a first value; or
when the quantity of coded bits that encounter a decoding error is greater than or equal to T, a value of the indicator bit is a second value, wherein
the first value is different from the second value.

20. The method according to any one of claims 17 to 19, further comprising:

$$N - 1 \geq \log_2 \sum_{i=1}^{T} \binom{k}{i}$$

setting T to a maximum value that enables $\quad$ to be true, wherein N is an information bit length of the second indication information, and k is a quantity of information bits in a first coded bit sequence.

21. An information transmission method, comprising:

receiving, by a second communication apparatus, a third to-be-decoded sequence, wherein the third to-be-decoded sequence is a sequence formed by a third coded bit sequence transmitted through a channel, wherein the third coded bit sequence is sent by a first communication apparatus; and decoding, by the second communication apparatus, the third to-be-decoded sequence to obtain a first decoding result;
sending, by the second communication apparatus, the first decoding result if the decoding fails;
receiving, by the second communication apparatus, second indication information, wherein the second indication information comprises information about a location of at least one coded bit in the third coded bit sequence; and
obtaining, by the second communication apparatus, a second decoding result based on the second indication information and the first decoding result.

22. The method according to claim 21, wherein the second indication information further comprises an indicator bit; and the obtaining, by the second communication apparatus, a second decoding result based on the second indication information and the first decoding result comprises:

when the indicator bit is a first value, determining, by the second communication apparatus based on the information about the location of the at least one coded bit in the third coded bit sequence, a coded bit that encounters an error in the first decoding result, and correcting the coded bit that encounters an error, to obtain the second decoding result; or

when the indicator bit is a second value, correcting, by the second communication apparatus based on the information about the location of the at least one coded bit in the third coded bit sequence, prior information corresponding to the first decoding result, and re-decoding the third coded bit sequence based on corrected prior information, to obtain the second decoding result.

23. An information transmission method, comprising:

encoding, by a first communication apparatus, to-be-transmitted information coded bits by using a low-density parity-check LDPC matrix, to obtain a to-be-transmitted coded bit sequence, wherein the to-be-transmitted coded bit sequence comprises a coded bit corresponding to one or more first variable nodes and a coded bit corresponding to one or more second variable nodes, and a column weight corresponding to the second variable node is 1;

sending, by the first communication apparatus, the coded bit corresponding to the one or more first variable nodes;

receiving, by the first communication apparatus, third indication information, wherein the third indication information indicates at least one second variable node in the one or more second variable nodes;

allocating, by the first communication apparatus, transmit power to the coded bit corresponding to the one or more second variable nodes based on the third indication information; and

sending, by the first communication apparatus, the coded bit corresponding to the one or more second variable nodes based on the allocated transmit power.

24. The method according to claim 23, wherein the third indication information comprises:

first information, wherein the first information indicates a second variable node whose transmit power needs to be increased in the one or more second variable nodes; and/or

second information, wherein the second information indicates a second variable node whose transmit power needs to be decreased in the one or more second variable nodes.

25. The method according to claim 23, wherein

prior information or posterior information corresponding to a first variable node associated with the second variable node whose transmit power needs to be increased is within a first threshold range; and

prior information or posterior information corresponding to a first variable node associated with the second variable node whose transmit power needs to be decreased is within a second threshold range, wherein

the first threshold range is different from the second threshold range.

26. The method according to claim 25, wherein the prior information comprises an LLR or a channel estimation value, and/or the posterior information comprises a soft value.

27. An information transmission method, comprising:

receiving, by a second communication apparatus, a fourth to-be-decoded sequence, wherein the fourth to-be-decoded sequence is a sequence formed by a coded bit transmitted through a channel, wherein the coded bit is corresponding to one or more first variable nodes, the coded bit corresponding to the one or more first variable nodes is comprised in a coded bit sequence generated based on an LDPC matrix, the coded bit sequence generated based on the LDPC matrix further comprises a coded bit corresponding to one or more second variable nodes, and a column weight corresponding to the second variable node is 1;

decoding, by the second communication apparatus, the fourth to-be-decoded sequence by using the LDPC matrix;

determining, by the second communication apparatus, at least one second variable node from the one or more second variable nodes if the decoding fails; and

sending, by the second communication apparatus, third indication information, wherein the third indication information indicates the at least one second variable node.

28. The method according to claim 27, wherein the third indication information comprises:

first information, wherein the first information indicates a second variable node whose transmit power needs to be increased in the one or more second variable nodes; and/or
second information, wherein the second information indicates a second variable node whose transmit power needs to be decreased in the one or more second variable nodes.

29. The method according to claim 28, wherein

prior information or posterior information corresponding to a first variable node associated with the second variable node whose transmit power needs to be increased is within a first threshold range; and
prior information or posterior information corresponding to a first variable node associated with the second variable node whose transmit power needs to be decreased is within a second threshold range, wherein the first threshold range is different from the second threshold range.

30. The method according to claim 29, wherein the prior information comprises an LLR or a channel estimation value, and/or the posterior information comprises a soft value.

31. A communication apparatus, comprising a module configured to perform the method according to any one of claims 1 to 30.

32. A communication apparatus, comprising at least one processor and a communication interface communicatively connected to the at least one processor, wherein the at least one processor executes instructions stored in a memory, to enable the apparatus to perform, through the communication interface, the method according to any one of claims 1 to 30.

33. The apparatus according to claim 32, wherein the apparatus further comprises the memory, the memory is connected to the at least one processor, and the memory stores the instructions executable by the at least one processor.

34. A communication apparatus, comprising an input/output interface and a logic circuit, wherein the input/output interface is configured to output a coded bit sequence or input a to-be-decoded sequence, and the logic circuit is configured to perform the method according to any one of claims 1 to 30.

35. A computer-readable storage medium, comprising a program or instructions, wherein when the program or the instructions are run on a computer, the method according to any one of claims 1 to 30 is performed.

36. A computer program product, comprising instructions, wherein when the instructions are run on a computer, the method according to any one of claims 1 to 30 is performed.

37. A communication system, comprising a first communication apparatus and a second communication apparatus, wherein the first communication apparatus is configured to perform the method according to any one of claims 1 to 7, 17 to 20, and 23 to 26, and the second communication apparatus is configured to perform the method according to any one of claims 8 to 16, 21 to 22, and 27 to 30.

FIG. 1

FIG. 2

$$d_k^{(0)} \quad d_k^{(1)} \qquad d_k^{(2)}$$

| A | B | O |
|---|---|---|
| C | | I |

FIG. 3

Initial transmission ↓      Retransmission ↓

| | | | | | | | | | | | | | | | | | | | | | | | | | | | |
|---|---|---|---|---|---|---|---|---|---|---|---|---|---|---|---|---|---|---|---|---|---|---|---|---|---|---|---|
| 1 | 1 | 1 | 1 | 0 | 0 | 1 | 0 | 0 | 1 | 1 | 1 | 0 | 0 | 0 | 0 | 0 | 0 | 0 | 0 | 0 | 0 | 0 | 0 | 0 | 0 | 0 | 0 |
| 1 | 0 | 0 | 1 | 1 | 1 | 1 | 1 | 1 | 1 | 0 | 1 | 1 | 0 | 0 | 0 | 0 | 0 | 0 | 0 | 0 | 0 | 0 | 0 | 0 | 0 | 0 | 0 |
| 1 | 1 | 0 | 1 | 1 | 0 | 0 | 0 | 1 | 0 | 1 | 0 | 1 | 1 | 0 | 0 | 0 | 0 | 0 | 0 | 0 | 0 | 0 | 0 | 0 | 0 | 0 | 0 |
| 0 | 1 | 1 | 0 | 1 | 1 | 1 | 1 | 1 | 1 | 1 | 0 | 0 | 1 | 0 | 0 | 0 | 0 | 0 | 0 | 0 | 0 | 0 | 0 | 0 | 0 | 0 | 0 |
| 1 | 1 | 0 | 0 | 0 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 |
| 1 | 1 | 0 | 0 | 0 | 1 | 0 | 1 | 0 | 0 | 0 | 1 | 0 | 0 | 0 | 1 | 0 | 0 | 0 | 0 | 0 | 0 | 0 | 0 | 0 | 0 | 0 | 0 |
| 1 | 0 | 0 | 0 | 0 | 1 | 0 | 1 | 0 | 1 | 0 | 1 | 0 | 0 | 0 | 0 | 1 | 0 | 0 | 0 | 0 | 0 | 0 | 0 | 0 | 0 | 0 | 0 |
| 0 | 1 | 0 | 0 | 0 | 1 | 0 | 1 | 0 | 0 | 0 | 1 | 0 | 1 | 0 | 0 | 0 | 1 | 0 | 0 | 0 | 0 | 0 | 0 | 0 | 0 | 0 | 0 |
| 1 | 1 | 0 | 0 | 0 | 0 | 0 | 0 | 0 | 0 | 0 | 0 | 0 | 1 | 0 | 0 | 0 | 0 | 0 | 1 | 0 | 0 | 0 | 0 | 0 | 0 | 0 | 0 |
| 0 | 1 | 0 | 0 | 0 | 0 | 0 | 0 | 1 | 0 | 1 | 1 | 0 | 0 | 0 | 0 | 0 | 0 | 0 | 1 | 0 | 0 | 0 | 0 | 0 | 0 | 0 | 0 |
| 1 | 1 | 0 | 0 | 0 | 0 | 1 | 1 | 0 | 0 | 0 | 0 | 0 | 0 | 0 | 0 | 0 | 0 | 0 | 0 | 1 | 0 | 0 | 0 | 0 | 0 | 0 | 0 |
| 1 | 0 | 0 | 0 | 0 | 0 | 0 | 1 | 0 | 1 | 0 | 0 | 0 | 1 | 0 | 0 | 0 | 0 | 0 | 0 | 0 | 1 | 0 | 0 | 0 | 0 | 0 | 0 |
| 0 | 1 | 1 | 1 | 1 | 0 | 0 | 0 | 0 | 0 | 0 | 1 | 0 | 0 | 0 | 0 | 0 | 0 | 0 | 0 | 0 | 0 | 1 | 0 | 0 | 0 | 0 | 0 |
| 1 | 1 | 0 | 0 | 0 | 0 | 0 | 0 | 1 | 0 | 0 | 0 | 0 | 1 | 0 | 0 | 0 | 0 | 0 | 0 | 0 | 0 | 0 | 1 | 0 | 0 | 0 | 0 |
| 0 | 1 | 0 | 0 | 0 | 0 | 1 | 0 | 0 | 0 | 0 | 1 | 0 | 1 | 0 | 0 | 0 | 0 | 0 | 0 | 0 | 0 | 0 | 0 | 1 | 0 | 0 | 0 |
| 1 | 0 | 0 | 0 | 0 | 0 | 0 | 0 | 0 | 0 | 1 | 1 | 0 | 0 | 0 | 0 | 0 | 0 | 0 | 0 | 0 | 0 | 0 | 0 | 0 | 1 | 0 | 0 |
| 0 | 1 | 0 | 0 | 0 | 0 | 0 | 0 | 0 | 1 | 0 | 1 | 1 | 0 | 0 | 0 | 0 | 0 | 0 | 0 | 0 | 0 | 0 | 0 | 0 | 0 | 1 | 0 |
| 0 | 1 | 0 | 0 | 0 | 1 | 0 | 0 | 0 | 0 | 0 | 1 | 1 | 0 | 0 | 0 | 0 | 0 | 0 | 0 | 0 | 0 | 0 | 0 | 0 | 0 | 0 | 1 |

FIG. 4

Transmit end

Receive end

S501: The transmit end sends a first coded bit sequence; and correspondingly, the receive end receives a first to-be-decoded sequence

S502: The receive end decodes the first to-be-decoded sequence; and if the decoding fails, the receive end determines first indication information, where the first indication information includes information about a location, in the to-be-transmitted coded bit sequence, of at least one sent coded bit in a to-be-transmitted coded bit sequence

S503: The receive end sends the first indication information; and correspondingly, the transmit end receives the first indication information

S504: The transmit end sends a second coded bit sequence based on the first indication information; and correspondingly, the receive end receives a second to-be-decoded sequence

S505: The receive end performs re-decoding based on the second to-be-decoded sequence

FIG. 5A

N=128, K=64, QPSK/FADING

FIG. 5B

**N=128, K=64, QPSK/FADING**

FIG. 5C

**N=128, K=64, QPSK/FADING**

FIG. 5D

Transmit end

Receive end

S601: The transmit end sends a third coded bit sequence; and correspondingly, the receive end receives a third to-be-decoded sequence

S602: The receive end decodes the third to-be-decoded sequence to obtain a first decoding result

S603: If the decoding fails, the receive end sends the first decoding result, and correspondingly, the transmit end receives the first decoding result

S604: The transmit end determines, based on the first decoding result and an information bit in the third coded bit sequence, a coded bit that encounters a decoding error from the third coded bit sequence; and the transmit end determines at least one coded bit in the third coded bit sequence based on the coded bit that encounters a decoding error

S605: The transmit end sends second indication information, where the second indication information includes information about a location of the at least one coded bit; and correspondingly, the receive end receives the second indication information

S606: The receive end obtains a second decoding result based on the second indication information and the first decoding result

FIG. 6A

**N=128, K=32, QPSK/AWGN**

FIG. 6B

FIG. 6C

Transmit end

Receive end

S701: The transmit end encodes to-be-transmitted information coded bits by using an LDPC matrix, to obtain a to-be-transmitted coded bit sequence

S702: The transmit end sends a coded bit corresponding to one or more first variable nodes; and correspondingly, the receive end receives a fourth to-be-decoded sequence

S703: The receive end decodes the fourth to-be-decoded sequence by using the LDPC matrix; and if the decoding fails, the receive end determines at least one second variable node from one or more second variable nodes

S704: The receive end sends third indication information; and correspondingly, the transmit end receives the third indication information

S705: The transmit end allocates transmit power to a coded bit corresponding to the one or more second variable nodes based on the third indication information

S706: The transmit end sends the coded bit corresponding to the one or more second variable nodes based on the allocated transmit power; and correspondingly, the receive end receives a fifth to-be-decoded sequence

FIG. 7A

FIG. 7B

FIG. 8

**Apparatus 900**

— 903

Communication interface

— 901

Processor

— 904

— 902

Memory

FIG. 9

**Communication apparatus 1000**

— 1001

Input/Output interface

— 1002

Logic circuit

FIG. 10

## INTERNATIONAL SEARCH REPORT

<table>
<tr><td>International application No.</td></tr>
<tr><td><strong>PCT/CN2023/091989</strong></td></tr>
</table>

**A. CLASSIFICATION OF SUBJECT MATTER**

H04L 1/00(2006.01)i; H04L 1/16(2023.01)i; H04L 1/18(2023.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT; 3GPP: 极化码, 编码, 译码, 解码, 比特, 码块, 序列, 正确, 成功, 错误, 失败, 出错, 反馈, 位置, 指示, 重传, polar, encode, coding, bit, success, NACK, indicate, feedback, position, HARQ

**C. DOCUMENTS CONSIDERED TO BE RELEVANT**

| Category* | Citation of document, with indication, where appropriate, of the relevant passages | Relevant to claim No. |
|---|---|---|
| X | CN 107733551 A (HUAWEI TECHNOLOGIES CO., LTD.) 23 February 2018 (2018-02-23) description, paragraphs [0056]-[0133] | 1-37 |
| A | CN 112152754 A (HUAWEI TECHNOLOGIES CO., LTD.) 29 December 2020 (2020-12-29) entire document | 1-37 |
| A | CN 111200442 A (HUAWEI TECHNOLOGIES CO., LTD.) 26 May 2020 (2020-05-26) entire document | 1-37 |
| A | CN 108352936 A (QUALCOMM INC.) 31 July 2018 (2018-07-31) entire document | 1-37 |
| A | US 2021328716 A1 (LG ELECTRONICS INC.) 21 October 2021 (2021-10-21) entire document | 1-37 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 July 2023** | **19 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/091989**

| Patent document cited in search report | | | Publication date (day/month/year) | Patent family member(s) | | | Publication date (day/month/year) |
|---|---|---|---|---|---|---|---|
| CN | 107733551 | A | 23 February 2018 | WO | 2018028682 | A1 | 15 February 2018 |
| CN | 112152754 | A | 29 December 2020 | CN | 112152754 | B | 28 December 2021 |
| | | | | WO | 2020259222 | A1 | 30 December 2020 |
| CN | 111200442 | A | 26 May 2020 | None | | | |
| CN | 108352936 | A | 31 July 2018 | EP | 3375114 | A1 | 19 September 2018 |
| | | | | WO | 2017082986 | A1 | 18 May 2017 |
| | | | | TW | 201724760 | A | 01 July 2017 |
| | | | | TWI | 700897 | B | 01 August 2020 |
| | | | | AU | 2016351377 | A1 | 26 April 2018 |
| | | | | AU | 2016351377 | B2 | 10 December 2020 |
| | | | | US | 2020412387 | A1 | 31 December 2020 |
| | | | | US | 11671120 | B2 | 06 June 2023 |
| | | | | JP | 2018533882 | A | 15 November 2018 |
| | | | | JP | 6883033 | B2 | 02 June 2021 |
| | | | | KR | 20180081727 | A | 17 July 2018 |
| | | | | US | 2017141798 | A1 | 18 May 2017 |
| | | | | US | 10784901 | B2 | 22 September 2020 |
| | | | | BR | 112018009594 | A2 | 06 November 2018 |
| US | 2021328716 | A1 | 21 October 2021 | WO | 2020045943 | A1 | 05 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210589412